# EUROPEAN PATENT APPLICATION

(11) **EP 4 191 132 A1**
(43) Date of publication of application: **07.06.2023**
(21) Application number: 21850387.8
(22) Date of filing: 27.07.2021
(51) Int. Cl.: F21V 33/00, G02B 1/14, G02B 5/02, F21S 2/00

(54) **LIGHTING-DEVICE LIGHT GUIDE MEMBER, LIGHTING DEVICE, AND BUILDING MATERIAL**

(30) Priority: 28.07.2020 JP 2020127530; 19.05.2021 JP 2021084593
(71) Applicant: Nitto Denko Corporation, Ibaraki-shi, Osaka 567-8680 (JP)
(72) Inventor: NAKAMURA, Kozo, Ibaraki-shi, Osaka 567-8680 (JP); WENG, Yufeng, Ibaraki-shi, Osaka 567-8680 (JP); YOSHIKAWA, Takahiro, Ibaraki-shi, Osaka 567-8680 (JP)
(74) Representative: Hoffmann Eitle
(86) International application number: PCT/JP2021/027768
(87) International publication number: WO 2022/025067

(57) **Abstract**

A lightguide component for illumination devices includes: a lightguide layer having a first principal face, a second principal face at an opposite side from the first principal face, and a light-receiving side face to receive light emitted from a light source; a first low-refractive index layer (20A) that is disposed at the first principal face side of the lightguide layer, the first low-refractive index layer having a refractive index n_{L1} which is smaller than a refractive index n_{GP} of the lightguide layer; and a light distribution controlling structure (**14A, 14B**) capable of at least directing a portion of light propagating in the lightguide layer toward the first low-refractive index layer or in an opposite direction from the first low-refractive index layer. The lightguide component has a visible light transmittance of 60% or more, and a haze value of less than 10%.

## Description

### TECHNICAL FIELD

The present invention relates to lightguide components for illumination devices, illumination devices, and construction components, and more particularly to sheet-shaped or film-shaped transparent lightguide components for illumination devices, as well as illumination devices and construction components having the same. Note that construction components include those exterior applications and interior applications.

### BACKGROUND ART

In recent years, use of next-generation solid state lighting (SSL), such as LED illumination, has been promoted. For example, lighting with good design or fun, called architainment lighting, has been proposed that are based on e.g. combinations of a construction component and an illumination device.

For example, Patent Document 1 discloses a one-side illumination-cum-window having a light source at an end of a plate-shaped transparent base, such that, for illumination at night, the one-side illumination-cum-window functions as an illumination device allowing light that has been emitted from the light source and guided in the transparent base to be output through one surface of the transparent base, and for non-illumination during day, the one-side illumination-cum-window functions as a transparent window.

The illumination device, termed one-side illumination-cum-window, in Patent Document 1 has a plurality of reflective recessed surfaces (or projecting surfaces) formed on one principal face of the transparent base, such that light which has been guided in the transparent base and reflected from the plurality of reflective recessed surfaces (or projecting surfaces) is emitted from the other principal face.

Such reflective recessed surfaces (or projecting surfaces) are likely to have dirt or dust adhere thereto, or become scratchd. There may also be problems in that difficulty in obtaining adequate light distribution control (distribution control of the distribution directions of illumination light) based on the reflective recessed surfaces (or projecting surfaces), or adequate transmittance with respect to visible light (hereinafter referred to as "visible light transmittance"), may result in a cloudy appearance resembling that of frosted glass, for example.

On the other hand, Patent Document 2 discloses an optical device that includes an optical medium layer (e.g., an image representation body such as a poster, a reflection type display, or an electronic paper, or a transparent window or a wall) and a transparent illumination device to irradiate the optical medium layer with light. The transparent illumination device includes: a lightguide layer; a low-refractive index layer disposed on the viewer's side of the lightguide layer; and an optically functional layer (a low-refractive index layer, or a layer having multiple air cavities) provided between the lightguide layer and the optical medium layer. The transparent illumination device described in Patent Document 2 does not have reflective recessed faces (or projecting faces) on its outermost surface. Moreover, since it has a low-refractive index layer disposed on the viewer's side, even if dirt adheres to its surface, light will not leak therefrom. Patent Document 3 discloses an LED illumination device that includes a lightguide layer, a low-refractive index layer, and a base layer. Even if dirt adheres to the surface of the illumination device of Patent Document 3, light guiding efficiency does not deteriorate.

Patent Documents 4 and 5 disclose light distribution structures which utilize total reflection at interfaces between multiple air cavities. By using the light distribution structures disclosed in Patent Documents 4 and 5, the flexibility and accuracy of light distribution control can be improved.

The entire disclosure of Patent Documents 2 to 5 is incorporated herein by reference.

### CITATION LIST

### PATENT LITERATURE

[Patent Document 1] International Publication No. WO/2019/102959
[Patent Document 2] International Publication No. WO/2019/182091
[Patent Document 3] International Publication No. WO/2019/146628
[Patent Document 4] International Publication No. WO/2011/124765
[Patent Document 5] International Publication No. WO/2019/087118
[Patent Document 6] Japanese Laid-Open Patent Publication No. 2001-215312

### SUMMARY OF INVENTION

### TECHNICAL PROBLEM

While conventional transparent illumination devices can be used for windows and walls, for example, their applications were limited for reasons such as low transmittance or tendency to become cloudy (i.e., having a large haze value), and so on. One conventional technique may be a method that involves forming a dot pattern on a light guide plate to extract light; however, this method does not provide sufficient transparency in the normal direction. Furthermore, some had problems such as the likeliness of the surface becoming dirty, scratchd, or experiencing large changes in optical characteristics due to dirt or scratches. Depending on the environment of use, condensation may occur on the surface, thereby inducing dirt to adhere to the surface. Patent Document 6 discloses an optical film that includes: a layer having multiple groove structures with optical path-converting slopes; a cover film; and an anti-soiling layer, but this does not ensure sufficient transparency.

The present invention has been made in order to solve at least one of the aforementioned problems of conventional transparent illumination devices, and aims to provide an illumination device and a lightguide component for illumination devices having a higher transmittance than conventional and having a small haze value, for example. The present invention also aims to provide a construction component having such an illumination device.

### SOLUTION TO PROBLEM

According to embodiments of the present invention, means for solution as recited in the following Items are provided.

### [Item 1]

A lightguide component for illumination devices comprising:
a lightguide layer having a first principal face, a second principal face at an opposite side from the first principal face, and a light-receiving side face to receive light emitted from a light source;
a first low-refractive index layer that is disposed at the first principal face side of the lightguide layer, the first low-refractive index layer having a refractive index n_{L1} which is smaller than a refractive index n_{GP} of the lightguide layer; and
a light distribution controlling structure capable of at least directing a portion of light propagating in the lightguide layer toward the first low-refractive index layer or in an opposite direction from the first low-refractive index layer, wherein
the lightguide component has a visible light transmittance of 60% or more and a haze value of less than 10%.

### [Item 2]

The lightguide component for illumination devices of Item 1, wherein the light distribution controlling structure at least directs a portion of light propagating in the lightguide layer toward the first low-refractive index layer.

### [Item 3]

The lightguide component for illumination devices of Item 1, wherein the light distribution controlling structure at least directs a portion of light propagating in the lightguide layer in an opposite direction from the first low-refractive index layer.

### [Item 4]

The lightguide component for illumination devices of any one of Items 1 to 3, further comprising a first hard coat layer that is disposed at an opposite side of the first low-refractive index layer from the lightguide layer, the first hard coat layer having a hardness which is pencil hardness H or higher.

### [Item 5]

The lightguide component for illumination devices of any one of Items 1 to 4, comprising a first base layer at an opposite side of the first low-refractive index layer from the lightguide layer, wherein the first hard coat layer is formed at an opposite side of the first base layer from the first low-refractive index layer. The refractive index n_{L1} of the first low-refractive index layer is not less than 1.05 and not more than 1.30, for example.

### [Item 6]

The lightguide component for illumination devices of any one of Items 1 to 5, wherein the light distribution controlling structure includes a plurality of internal spaces creating an interface that directs light via total internal reflection toward the first low-refractive index layer or in an opposite direction from the first low-refractive index layer.

### [Item 7]

The lightguide component for illumination devices of Item 6, wherein the light distribution controlling structure comprises a first light distribution controlling structure in which the plurality of internal spaces are formed in the lightguide layer.

### [Item 8]

The lightguide component for illumination devices of Item 6, wherein the light distribution controlling structure comprises a second light distribution controlling structure in which the plurality of internal spaces are formed in a first redirection layer that is provided between the lightguide layer and the first low-refractive index layer.

### [Item 9]

The lightguide component for illumination devices of Item 8, further comprising a first light coupling layer that is provided between the lightguide layer and the first redirection layer; and the first light coupling layer includes a plurality of first low-refractive index regions having a refractive index n_{C1} which is smaller than the refractive index n_{GP} of the lightguide layer.

### [Item 10]

The lightguide component for illumination devices of Item 6, wherein the light distribution controlling structure comprises a third light distribution controlling structure in which the plurality of internal spaces are formed in a second redirection layer that is provided on the second principal face of the lightguide layer.

### [Item 11]

The lightguide component for illumination devices of any one of Items 6 to 10, wherein, in a plan view of the lightguide layer from a normal direction of the first principal face, a ratio of an area of the plurality of internal spaces to an area of the lightguide layer is 30% or less.

### [Item 12]

The lightguide component for illumination devices of any one of Items 1 to 11, further comprising a second low-refractive index layer that is disposed at the second principal face side of the lightguide layer, the second low-refractive index layer having a refractive index n_{L2} which is smaller than the refractive index n_{GP} of the lightguide layer.

### [Item 13]

The lightguide component for illumination devices of Item 12, further comprising a second hard coat layer that is disposed at an opposite side of the second low-refractive index layer from the lightguide layer, the second hard coat layer having a hardness H_{H2} which is higher than a hardness H_{GP} of the lightguide layer. The hardness H_{H2} of the second hard coat layer is pencil hardness H or higher, for example.

### [Item 14]

The lightguide component for illumination devices of Item 13, comprising a second base layer at an opposite side of the second low-refractive index layer from the lightguide layer, wherein the second hard coat layer is formed at an opposite side of the second base layer from the second low-refractive index layer.

The refractive index of the second low-refractive index layer is not less than 1.05 and not more than 1.30, for example. A second low-refractive index layer having a refractive index of 1.30 or less is formed by using a porous material, for example, and therefore its hardness H_{L2} is lower than the hardness H_{GP} of the lightguide layer, i.e., brittle.

### [Item 15]

The lightguide component for illumination devices of Item 10, further comprising a second light coupling layer that is provided between the lightguide layer and the second redirection layer, wherein the second light coupling layer includes a plurality of second low-refractive index regions having a refractive index n_{C2} which is smaller than the refractive index n_{GP} of the lightguide layer.

### [Item 16]

The lightguide component for illumination devices of Item 13 or 14 indirectly depending from Item 4, wherein the first hard coat layer has a haze value which is greater than a haze value of the second hard coat layer. The first hard coat layer and/or the second hard coat layer include particles, for example.

### [Item 17]

The lightguide component for illumination devices of any one of Items 1 to 16, further comprising an anti-soiling layer which is water repellent and/or oil repellent (or hydrophilic) as an outermost layer at the first principal face side or the second principal face side.

### [Item 18]

The lightguide component for illumination devices of Item 17, further comprising an anti-reflection layer provided at the lightguide layer side of the anti-soiling layer.

### [Item 19]

An illumination device comprising:
the lightguide component for illumination devices of any one of Items 1 to 18; and
a light source to emit light toward the light-receiving side face.

### [Item 20]

A construction component comprising the lightguide component for illumination devices of any one of Items 1 to 18.

### ADVANTAGEOUS EFFECTS OF INVENTION

According to an embodiment of the present invention, an illumination device having a higher transmittance than conventional and having a small haze value is provided. According to another embodiment of the present invention, a construction component having such an illumination device is provided.

### BRIEF DESCRIPTION OF DRAWINGS

[FIG. **1A**] A schematic cross-sectional view of an illumination device **100A_L** according to an embodiment of the present invention.
[FIG. **1B**] A schematic cross-sectional view of an illumination device **100B_L** according to an embodiment of the present invention.
[FIG. **2A**] A schematic cross-sectional view of an illumination device **200A_L** according to an embodiment of the present invention.
[FIG. **2B**] A schematic cross-sectional view of an illumination device **200B_L** according to an embodiment of the present invention.
[FIG. **3**] A schematic cross-sectional view of an illumination device **300A_L** according to an embodiment of the present invention.
[FIG. **4A**] A schematic cross-sectional view of a lightguide component **100A** according to an embodiment of the present invention.
[FIG. **4B**] A schematic cross-sectional view of a lightguide component **100B** according to an embodiment of the present invention.
[FIG. **5A**] A schematic cross-sectional view of a lightguide component **200A** according to an embodiment of the present invention.
[FIG. **5B**] A schematic cross-sectional view of a lightguide component **200B** according to an embodiment of the present invention.
[FIG. **6A**] A schematic cross-sectional view of a lightguide component **210A** according to an embodiment of the present invention.
[FIG. **6B**] A schematic cross-sectional view of a lightguide component **210B** according to an embodiment of the present invention.
[FIG. **7A**] A schematic cross-sectional view of a lightguide component **220A** according to an embodiment of the present invention.
[FIG. **7B**] A schematic cross-sectional view of a lightguide component **220B** according to an embodiment of the present invention.
[FIG. **8**] A schematic cross-sectional view of a lightguide component **100AD** according to an embodiment of the present invention.
[FIG. **9**] A schematic cross-sectional view of a lightguide component **210AD** according to an embodiment of the present invention.
[FIG. **10**] A schematic cross-sectional view of a lightguide component **200AD** according to an embodiment of the present invention.
[FIG. **11**] A schematic cross-sectional view of a lightguide component **220AD** according to an embodiment of the present invention.
[FIG. **12A**] A schematic cross-sectional view of a lightguide component **200AD_a** according to an Example.
[FIG. **12B**] A schematic cross-sectional view of a lightguide component **200BD_a** according to an Example.
[FIG. **13A**] A schematic cross-sectional view of a lightguide component **220AD_a** according to an Example.
[FIG. **13B**] A schematic cross-sectional view of a lightguide component **220AD_b** according to an Example.
[FIG. **13C**] A schematic cross-sectional view of a lightguide component **220BD_b** according to an Example.
[FIG. **14A**] A schematic plan view of a textured film **62** composing a redirection layer that is included in a lightguide component according to an embodiment of the present invention.
[FIG. **14B**] A schematic cross-sectional view of the textured film **62.**
[FIG. **15**] A schematic cross-sectional view of showing recesses **64** in the textured film **62.**
[FIG. **16**] A schematic plan view for describing the distribution of low-refractive index regions **80a.**
[FIG. **17**] A schematic cross-sectional view of a lightguide component **910A** according to Comparative Example.
[FIG. **18**] **17**] A schematic cross-sectional view of a lightguide component **920A** according to Comparative Example.
[FIG. **19A**] A schematic plan view showing recesses **94** in a textured film **92** used in Comparative Example 3.
[FIG. **19B**] A schematic cross-sectional view of showing recesses **94** in the textured film **92** used in Comparative Example 3.

### DESCRIPTION OF EMBODIMENTS

Hereinafter, with reference to the drawings, a lightguide component for illumination devices, an illumination device, and a construction component according to embodiments of the present invention will be described. Lightguide components for illumination devices, illumination devices, and construction components according to embodiments of the present invention are not limited to those exemplified below.

### [lightguide component for illumination devices and illumination device]

First, examples of lightguide components for illumination devices and illumination devices according to an embodiment of the present invention will be described with reference to the drawings.

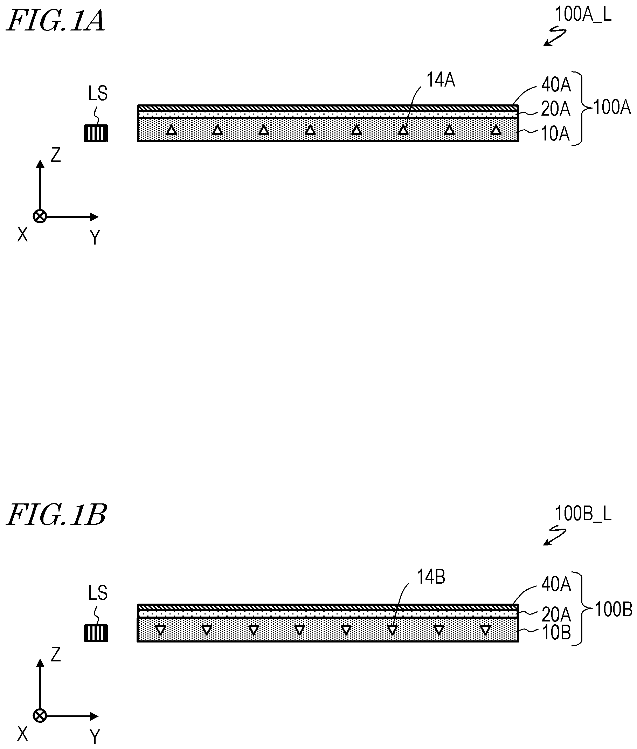

FIG. **1A** shows a schematic cross-sectional view of an illumination device **100A_L** according to an embodiment of the present invention. The illumination device **100A_L** includes: a light source **LS;** and a lightguide component **100A** that receives light emitted from the light source **LS,** propagates it in the Y direction, and allows it to exit in the Z direction. It will be appreciated that the propagating direction of light has some variation (distribution) from the Y direction, and also that the outgoing direction of light has some variation (distribution) from the Z direction. The lightguide component **100A** has a visible light transmittance of 60% or more. Herein, visible light is defined as light having a wavelength of not less than 380 nm and not more than 780 nm.

A lightguide layer **10A** which is included in the lightguide component **100A** has a first principal face, a second principal face at an opposite side from the first principal face, and a light-receiving side face to receive light emitted from the light source **LS.** In FIG. **1A****,** the upper principal face is the first principal face, and the lower one is the second principal face. The light source **LS** is an LED device, for example; an array of multiple LED devices may be used. Between the light source **LS** and the lightguide layer **10A,** coupling optics for efficiently guiding the light emitted from the light source **LS** to the lightguide layer **10A** may be provided.

The lightguide component **100A** includes: a first low-refractive index layer **20A** that is disposed at the first principal face side of the lightguide layer **10A,** the first low-refractive index layer **20A** having a refractive index n_{L1} which is smaller than a refractive index n_{GP} of the lightguide layer **10A;** and a first hard coat layer **40A** that is disposed at an opposite side of the first low-refractive index layer **20A** from the lightguide layer **10A,** the first hard coat layer **40A** having a hardness which is pencil hardness H or higher.

The lightguide layer **10A** is made of a known material having a high transmittance with respect to visible light. The lightguide layer **10A** is made of an acrylic resin such as polymethyl methacrylate (PMMA), a polycarbonate (PC)-based resin, a cycloolefin-based resin, or glass (e.g., quartz glass, non-alkaline glass, borosilicate glass), for example. The refractive index n_{GP} of the lightguide layer **10A** is e.g. not less than 1.40 and not more than 1.80. Unless otherwise specified, the refractive index refers to a refractive index that is measured with an ellipsometer at a wavelength of 550 nm. The thickness of the lightguide layer **10A** can be appropriately set depending on the application. The thickness of the lightguide layer **10A** is e.g. not less than 0.05 mm and not more than 50 mm.

The refractive index n_{L1} of the first low-refractive index layer **20A** is preferably e.g. 1.30 or less, more preferably 1.20 or less, and still more preferably 1.15 or less. The first low-refractive index layer **20A** is preferably a solid, preferably having a refractive index of e.g. 1.05 or more. The difference between the refractive index of the lightguide layer **10A** and the refractive index of the first low-refractive index layer **20A** is preferably 0.20 or more, more preferably 0.23 or more, and still more preferably 0.25 or more. A first low-refractive index layer **20A** having a refractive index of 1.30 or less can be formed by using a porous material, for example. The thickness of the first low-refractive index layer **20A** is e.g. not less than 0.3 um and not more than 5 µm.

When the low-refractive index layer is a porous material with internal voids, its porosity is preferably 35 volume% or more, more preferably 38 volume% or more, and especially preferably 40 volume% or more. Within such ranges, a low-refractive index layer having a particularly low refractive index can be formed. The upper limit of the porosity of the low-refractive index layer is e.g. 90 volume% or less, and preferably 75 volume% or less. Within such ranges, a low-refractive index layer with good strength can be formed. The porosity is a value that is calculated according to Lorentz-Lorenz's formula from a value of the refractive index measured with an ellipsometer.

As the low-refractive index layer, for example, a low-refractive index layer with voids as disclosed in Patent Document 3 can be used. The entire disclosure of Patent Document 3 is incorporated herein by reference. Specifically, low-refractive index layers with voids include: essentially spherical particles such as silica particles, silica particles having micropores, and silica hollow nanoparticles; fibrous particles such as cellulose nanofibers, alumina nanofibers, and silica nanofibers; and flat-plate particles such as nanoclay composed of bentonite. In one embodiment, the low-refractive index layer with voids is a porous material composed of particles (e.g., micropored particles) that are chemically bonded directly to one another. The particles composing the low-refractive index layer with voids may be at least partially bonded to one another via a small amount (e.g., less than the mass of the particles) of a binder component. The porosity and refractive index of the low-refractive index layer can be adjusted based on the particle size, particle size distribution, and the like of the particles composing the low-refractive index layer.

Examples of methods of obtaining a low-refractive index layer with voids include methods that are described in Japanese Laid-Open Patent Publication No. 2010-189212, Japanese Laid-Open Patent Publication No. 2008-040171, Japanese Laid-Open Patent Publication No. 2006-011175, International Publication No. WO/2004/113966, and references thereof. The entire disclosure of Japanese Laid-Open Patent Publication No. 2010-189212, Japanese Laid-Open Patent Publication No. 2008-040171, Japanese Laid-Open Patent Publication No. 2006-011175, International Publication No. WO/2004/113966 is incorporated herein by reference.

As the low-refractive index layer with voids, porous silica can be suitably used. Porous silica can be produced by the following method, for example: a method involving hydrolyzing and polycondensing at least one of silicon compounds, hydrolyzable silanes and/or silsesquioxanes, and their partial hydrolysates and dehydration-condensation products; a method that uses porous particles and/or hollow microparticles; and a method that generates an aerogel layer using the springback phenomenon, a method of pulverizing a gelatinous silicon compound obtained by sol-gel processing and using a pulverized gel in which micropored particles as the resultant pulverized body are chemically bonded to one another with a catalyst or the like; and so on. However, the low-refractive index layer is not limited to porous silica, and the production method is not limited to the exemplified production methods; any production method may be used for production. Silsesquioxane is a silicon compound with (RSiO_{1.5}; where R is a hydrocarbon group) as the basic structural unit. Although silsesquioxane is not exactly the same as silica, whose basic structural unit is SiO₂, it has a network structure cross-linked by siloxane bonds, similarly to silica. Therefore, any porous material that contains silsesquioxane as its basic structural unit is also referred to as porous silica or silica-based porous material.

Porous silica may be composed of micropored particles of a gelatinous silicon compound that are bonded to one another. An example of micropored particles of a gelatinous silicon compound is a pulverized body of the gelatinous silicon compound. Porous silica may be formed by coating a base with a coating solution that contains a pulverized body of a gelatinous silicon compound, for example. The pulverized body of the gelatinous silicon compound may chemically bonded (e.g., siloxane bonded) through catalytic action, light irradiation, heating, or the like, for example.

When the first low-refractive index layer **20A** exists, the interface between the lightguide layer **10A** and the first low-refractive index layer **20A** acts as an interface that is capable of totally reflecting light propagating in the lightguide layer **10A,** and is unaffected by the state above the first low-refractive index layer **20A.** If the first low-refractive index layer **20A** is absent, such that the surface of the lightguide layer **10A** is exposed, total reflection occurs at the interface between the surface of the lightguide layer **10A** and air. If the surface of the lightguide layer **10A** becomes dirty, total reflection may not occur at portions of the surface where dirt has adhered. This may result in problems such as leakage of light from the portions of the surface where dirt has adhered, and/or change in the distribution of light propagating in the lightguide layer **10A.** In other words, the first low-refractive index layer **20A** provides for an improved soil resistance of the surface of the lightguide component **100A.** This effect is maintained even if the first hard coat layer **40A** is formed upon the first low-refractive index layer **20A.**

The hardness H_{H1} of the first hard coat layer **40A** is preferably e.g. pencil hardness H or higher, even more preferably 2H or higher, and more preferably 4H or higher. On the other hand, although there is no limitation as to the upper limit of the hardness H_{H1} of the first hard coat layer **40A,** it is preferably pencil hardness 6H or lower, and more preferably 5H or lower. The pencil hardness is measure by a method that complies with the "pencil hardness test" under JIS K 5400. Note that the hardness H_{GP} of the lightguide layer **10A** is B, for example. The thickness of the first hard coat layer **40A** is preferably not less than 1 um and not more than 30 µm, more preferably not less than 2 um and not more than 20 µm, and still more preferably not less than 3 um and not more than 15 um. When the thickness of the first hard coat layer **40A** is in such ranges, good scratch resistance is provided.

In the case where the first low-refractive index layer **20A** has a hardness H_{L1} which is higher than the hardness H_{GP} of the lightguide layer **10A,** the first low-refractive index layer **20A** may double as the first hard coat layer **40A.** In other words, the first hard coat layer **40A** may be omitted. In this context, the hardness H_{L1} of the first low-refractive index layer **20A** is preferably pencil hardness H or higher, more preferably 2H or higher, and even more preferably 4H or higher; although there is no limitation as to the upper limit, it is preferably 6H or lower, and more preferably 5H or lower.

So long as the aforementioned properties are attained, the first hard coat layer **40A** may be made of any appropriate material. The first hard coat layer **40A** is a cured layer of a thermosetting resin or an ionizing radiation (e.g., visible light or ultraviolet)-curable resin, for example. Examples of such curable resins include acrylates such as urethane (meth)acrylate, polyester (meth)acrylate, and epoxy (meth)acrylate, silicone resins such as polysiloxane, unsaturated polyesters, and epoxy resins. The first hard coat layer **40A** can be formed by coating the base surface of interest with a material containing a solvent and a curable compound, for example, and curing it. Details of a hard coat layer that is suitably used as the first hard coat layer **40A** is described in Japanese Laid-Open Patent Publication No. 2011-237789, for example. The entire disclosure of Japanese Laid-Open Patent Publication No. 2011-237789 is incorporated herein by reference.

The lightguide component **100A** has a light distribution controlling structure that is capable of at least directing a portion of light propagating in the lightguide layer **10A** toward the first low-refractive index layer **20A.** The light distribution controlling structure includes a plurality of internal spaces **14A** creating an interface that directs light toward the first low-refractive index layer **20A** via total internal reflection. The internal spaces **14A** may be referred to as optical cavities. In the lightguide component **100A,** the plurality of internal spaces **14A** are formed in the lightguide layer **10A.** As is illustrated in the figure, for example, the internal space **14A** has a triangular cross-sectional shape (perpendicular to the X direction and parallel to the YZ plane) with its vertex angle pointing toward the first low-refractive index layer **20A** (in the Z direction, pointing upward in the figure), and directs the light propagating in the lightguide layer **10A** in the Y direction toward the first low-refractive index layer **20A.** Without being limited thereto, the cross-sectional shape of the internal space **14A** may be a trapezoid or the like, so long as they create an interface that directs light propagating in the Y direction toward the first low-refractive index layer **20A.** A light distribution controlling structure that is formed in the lightguide layer **10A** may be referred to as a first light distribution controlling structure.

Because the lightguide component **100A** has a first light distribution controlling structure that is created by the plurality of internal spaces **14A** in the lightguide layer **10A,** it may have a visible light transmittance of 60% or more, and a haze value of less than 10%. Moreover, as will be described later, by adjusting the shape and positioning, etc., of the plurality of internal spaces **14A,** it is possible to control the intensity distribution, emission efficiency, and luminance distribution of the outgoing light. Typically, the plurality of internal spaces **14A** are void portions (air cavities) filled with air inside. However, instead of air, the air cavities may be filled with a material having a lower refractive index than that of the lightguide layer **10A.**

In the lightguide component **100A,** the plurality of internal spaces **14A** are regularly or randomly provided along a principal face thereof. The size of the internal spaces **14A** can be appropriately selected so that they can be installed within the lightguide layer **10A.** As an lightguide layer including the internal spaces **14A** inside, although not particularly limited, lightguide layers disclosed in Patent Documents 2, 4 and 5 and International Publication No. WO/2011/127187 can be used, for example. The entire disclosure of these publications is incorporated herein by reference.

The lightguide layer **10A** can be produced by attaching together an unpatterned first film and a second film having a desired minute pattern formed thereon by lamination technique, or by bonding them together with an adhesive (including a pressure-sensitive adhesive), for example.

The formation of a minute pattern onto the second film may utilize laser patterning, direct laser imaging, laser drilling, and laser or electron beam irradiation with or without a mask. The material and refractive index value may be modified by printing, inkjet printing, screen printing, or other methods to impart individual properties. They can also be produced by micro/nanodispensing, dosing, direct "writing," discrete laser sintering, micro electrical discharge machining (micro EDM), micromachining, micro forming, imprinting, embossing, and the like.

In order to obtain a good visible light transmittance and a good haze value, the plurality of internal spaces **14A** defining the light distribution controlling structure are preferably such that: in a plan view of the lightguide layer **10A** from the normal direction of its principal faces, a ratio of the area of the plurality of internal spaces **14A** to the area of the lightguide layer **10A** (occupied area percentage) is 30% or less. Note that the occupied area percentage of the internal spaces **14A** may be uniform, or, in order to ensure that luminance does not decrease with increasing distance from the light source **LS,** the occupied area percentage may increase with increasing distance. As will be described later by referring to specific examples, the occupied area percentage of the internal spaces **14A** is preferably uniform. From the standpoint of obtaining a good luminance, the occupied area percentage of the internal spaces **14A** is preferably 1% or more. The occupied area percentage of the internal spaces **14A** is preferably not less than 1% and not more than 30%, with an upper limit value being more preferably 25% or less, and in order to obtain a high visible light transmittance, it is preferably 10% or less, and more preferably 5% or less.

The aforementioned characteristic aspects of the light distribution controlling structure pertain not only to the plurality of internal spaces **14A** formed in the lightguide layer **10A** exemplified herein, but also are common to various light distribution controlling structures to be described below. As a light distribution controlling structure created by a plurality of internal spaces, a light distribution structure described in Patent Document 5 may be used, for example.

FIG. **1B** shows a schematic cross-sectional view of an illumination device **100B_L** according to an embodiment of the present invention. The illumination device **100B_L** differs from the illumination device **100A_L** shown in FIG. **1A** in that the illumination device **100B_L** includes a lightguide component **100B** that receives light emitted from the light source **LS,** propagates it in the Y direction, and allows it to exit in the -Z direction.

A lightguide layer **10B** which is included in the lightguide component **100B** has a light distribution controlling structure that is capable of at least directing a portion of light propagating in the lightguide layer **10B** in an opposite direction from the first low-refractive index layer **20A.** The light distribution controlling structure includes a plurality of internal spaces **14B** creating an interface that directs light in an opposite direction from the first low-refractive index layer **20A** via total internal reflection. As is illustrated in the figure, for example, the internal spaces **14B** has a triangular cross-sectional shape (perpendicular to the X direction and parallel to the YZ plane) with its vertex angle pointing in the opposite direction of the first low-refractive index layer **20A** (in the -Z direction, pointing downward in the figure), and directs the light propagating in the lightguide layer **10B** in the Y direction in an opposite direction from the first low-refractive index layer **20A.** Without being limited thereto, the cross-sectional shape of the internal space **14B** may be a trapezoid or the like, so long as they create an interface that directs light propagating in the Y direction in an opposite direction from the first low-refractive index layer **20A.** Thus, by changing the cross-sectional shape (e.g., the orientation of the vertex angle of a triangle) of the internal space **14B,** the outgoing direction of light can be altered.

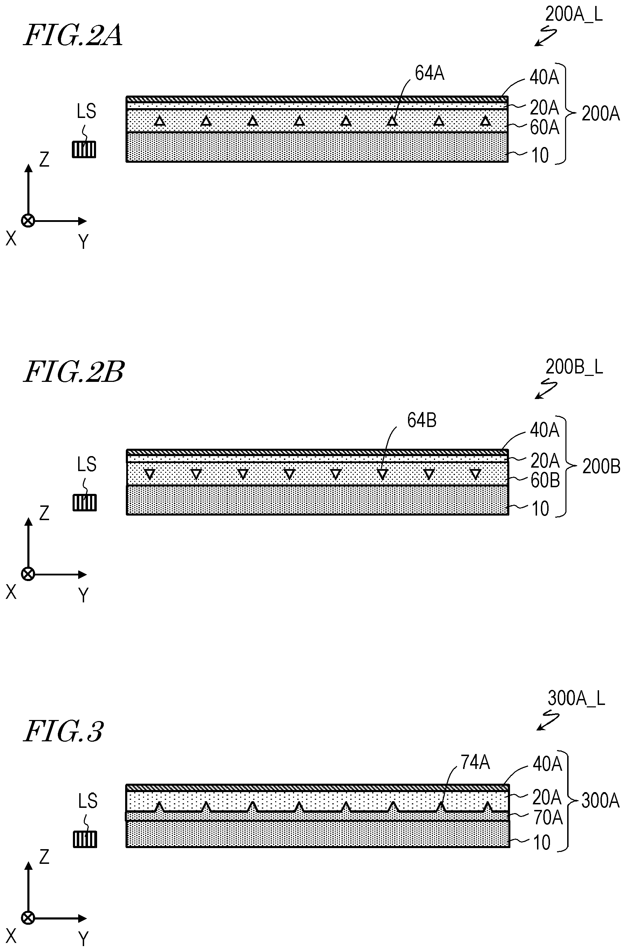

FIG. **2A** shows a schematic cross-sectional view of an illumination device **200A_L** according to an embodiment of the present invention. A lightguide component **200A** which is included in the illumination device **200A_L** includes a first redirection layer **60A** that is formed between the lightguide layer **10** and the first low-refractive index layer **20A,** and a plurality of internal spaces **64A** constituting a light distribution controlling structure are formed in the first redirection layer **60A.** The first redirection layer **60A** is capable of directing at least directing a portion of light propagating in the lightguide layer **10** toward the first low-refractive index layer **20A.** A light distribution controlling structure that is formed in the first redirection layer **60A** may be referred to as a second light distribution controlling structure. Similarly to the internal spaces **14A,** the internal spaces **64A** may take various cross-sectional shapes.

FIG. **2B** shows a schematic cross-sectional view of an illumination device **200B_L** according to an embodiment of the present invention. A lightguide component **200B** which is included in the illumination device **200B_L** includes a first redirection layer **60B** that is formed between the lightguide layer **10** and the first low-refractive index layer **20A,** and a plurality of internal spaces **64B** constituting a light distribution controlling structure are formed in the first redirection layer **60B.** The first redirection layer **60B** is capable of at least directing a portion of light propagating in the lightguide layer **10** in an opposite direction from the first low-refractive index layer **20A** (in the -Z direction). A light distribution controlling structure that is formed in the first redirection layer **60B** may be referred to as a second light distribution controlling structure. Similarly to the internal spaces **14B,** the internal spaces **64B** may take various cross-sectional shapes.

FIG. **3** shows a schematic cross-sectional view of another illumination device **300A_L** according to an embodiment of the present invention. A lightguide component **300A** which is included in the illumination device **300A_L** includes a first redirection layer **70A** that is formed between the lightguide layer **10** and the first low-refractive index layer **20A,** and a plurality of protrusions **74A** which are included in the first redirection layer **70A** constitute a light distribution controlling structure. The first redirection layer **70A** including the plurality of protrusions **74A** may be a known prism sheet, for example. The plurality of protrusions **74A** direct light propagating in the lightguide layer **10** in the Y direction toward the first low-refractive index layer **20A** (in the Z direction). Each protrusion **74A** has a triangular cross-sectional shape, for example; without being limited thereto, a trapezoid or the like may be adopted. By changing the cross-sectional shape of the protrusions **74A,** light propagating in the Y direction can even be directed in an opposite direction from the first low-refractive index layer **20A** (in the -Z direction). Instead of providing the first redirection layer **70A,** a plurality of protrusions (prismatic portions) may be directly formed on the surface of the lightguide layer **10A.**

Next, the structure of the lightguide component will be described in detail. Hereinafter, examples will be described where the light distribution controlling structure includes a plurality of internal spaces (**14A**) creating an interface that directs light toward the first low-refractive index layer via total internal reflection, or a plurality of internal spaces (**14B**) creating an interface that directs light in an opposite direction from the first low-refractive index layer via total internal reflection.

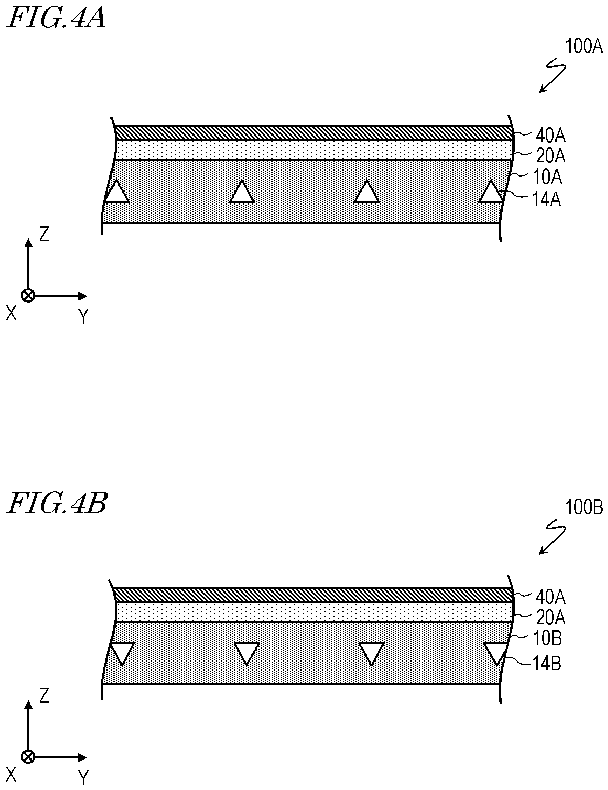

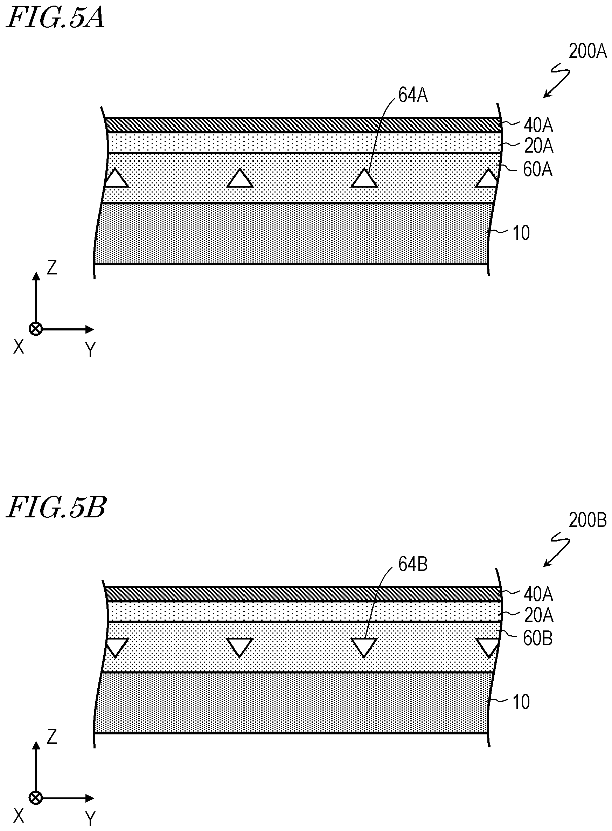

FIG. **4A** shows a cross-sectional view of the lightguide component **100A** of the illumination device **100A_L** shown in FIG. **1A****,** and FIG. **4B** shows a cross-sectional view of the lightguide component **100B** of the illumination device **100B_L** shown in FIG. **1B****.** FIG. **5A** shows a cross-sectional view of the lightguide component **200A** of the illumination device **200A_L** shown in FIG. **2A****,** and FIG. **5B** shows a cross-sectional view of the lightguide component **200B** of the illumination device **200B_L** shown in FIG. **2B****.**

As shown in FIG. **4A****,** in the lightguide component **100A,** the plurality of internal spaces **14A** formed in the lightguide layer **10A** constitute a light distribution controlling structure. As shown in FIG. **4B****,** in the lightguide component **100B,** the plurality of internal spaces **14B** formed in the lightguide layer **10B** constitute a light distribution controlling structure. As shown in FIG. **5A****,** in the lightguide component **200A,** the plurality of internal spaces **64A** formed in the first redirection layer **60A,** which is formed upon the lightguide layer **10,** constitute a light distribution controlling structure. As shown in FIG. **5B****,** in the lightguide component **200B,** the plurality of internal spaces **64B** formed in the first redirection layer **60B,** which is formed upon the lightguide layer **10,** constitute a light distribution controlling structure. Preferably, the refractive indices n_{D1} of the first redirection layers **60A** and **60B** are essentially equal to the refractive index n_{GP} of the lightguide layer 10, and the difference (absolute value) between their refractive indices is preferably 0.15 or less, and more preferably 0.1 or less. Moreover, the difference between the refractive index n_{GP} of the lightguide layer **10** and the refractive index n_{L1} of the first low-refractive index layer **20A** (FIG. **4A,** FIG. **4B**)**,** and the difference between the refractive index n_{D1} of the first redirection layer **60A** and the refractive index n_{L1} of the first low-refractive index layer **20A** (FIG. **5A,** FIG. **5B**)**,** are each preferably 0.2 or more, and more preferably 0.25 or more. By adjusting these differences, it is possible to control the critical angle at which total reflection occurs.

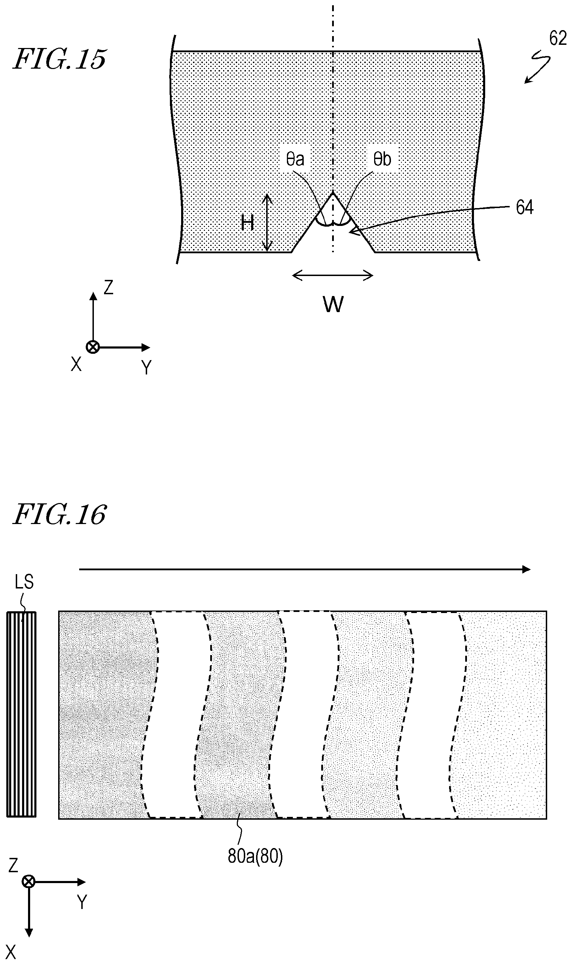

The light distribution controlling structure including the plurality of internal spaces **14A, 14B, 64A, 64B** causes total reflection of light propagating in the lightguide layer **10A, 10B** or the first redirection layer **60A, 60B** at an interface created by the internal spaces **14A, 14B, 64A, 64B,** thereby orienting the outgoing direction of light in the Z direction (internal spaces **14A, 64A**) or in the -Z direction (internal spaces **14B, 64B**)**.** On the other hand, in the first redirection layer **70A** shown in FIG. **3****,** which is composed of e.g. a known prism sheet, a portion of the light propagating in the first redirection layer **70A** undergoes total reflection at the interface with the first low-refractive index layer **20A,** and is returned to the first redirection layer **70A.** Thus, the light distribution controlling structure including the internal spaces **14A, 14B, 64A, 64B** provides a higher efficiency of light utilization than do known light distribution controlling structures such as prism sheets. Also, by adjusting the cross-sectional shape (e.g., angles **θa, θb** of slopes in FIG. **15**)**,** size, density of placement, and distribution of the internal spaces **14A, 14B, 64A, 64B,** it is possible to control the intensity distribution.

On the other hand, by adjusting the cross-sectional shape, size, density of placement, and distribution of the plurality of internal spaces **14A, 14B, 64A, 64B** which are included in the light distribution controlling structure, it is possible to control the visible light transmittance and haze value of the lightguide component **100A, 100B, 200A** or **200B.** The visible light transmittance of the lightguide components **100A, 100B, 200A** and **200B** may be 60% or more, preferably 65% or more, 70% or more, 75% or more, or 80% or more, and their haze value may be less than 10%, preferably less than 9%, less than 8%, less than 7%, less than 6%, less than 5%, less than 4%, or less than 3%. Note that the haze value is to be measured by using a haze meter, as described in Examples below.

In order to obtain good visible light transmittance and haze value, the plurality of internal spaces **14A, 14B, 64A, 64B** which are included in the light distribution controlling structure are preferably such that: in a plan view of the lightguide layer **10A, 10B** or **10** from the normal direction of its principal faces, a ratio of the area of plurality of internal spaces **14A, 14B, 64A, 64B** to the area of the lightguide layer **10A, 10B** or **10** (occupied area percentage) is 30% or less. Note that the occupied area percentage of the internal spaces **14A, 14B, 64A, 64B** may be uniform, or, in order to ensure that luminance does not decrease with increasing distance from the light source **LS,** the occupied area percentage may increase with increasing distance. As will be described later by referring to specific examples, the occupied area percentage of the internal spaces **14A, 14B, 64A, 64B** is preferably uniform. From the standpoint of obtaining a good luminance, the occupied area percentage of the internal spaces **14A, 14B, 64A, 64B** is preferably 1% or more. The occupied area percentage of the internal spaces **14A, 14B, 64A, 64B** is preferably not less than 1% and not more than 30%, with an upper limit value being more preferably 25% or less, and in order to obtain a high visible light transmittance, it is preferably 10% or less, and more preferably 5% or less.

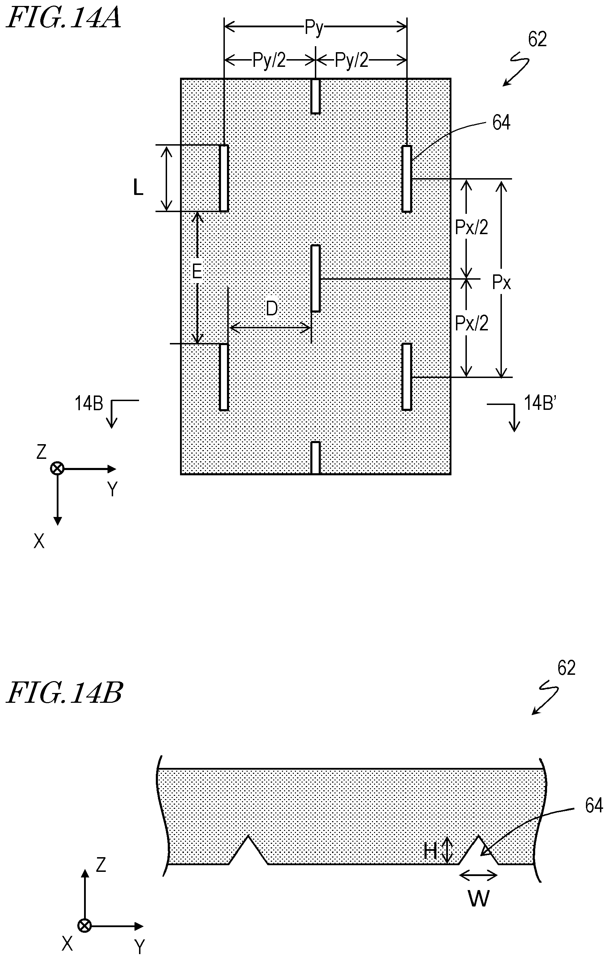

The size and density of the internal spaces **14A, 14B, 64A, 64B** affects the haze value. The size (length **L,** width **W:** see FIG. **14A,** FIG. **14B**) of the internal spaces **14A, 14B, 64A, 64B** is such that: for example, the length **L** is preferably not less than 10 um and not more than 500 um, and the width **W** is preferably not less than 1 um and not more than 100 um. Moreover, from the standpoint of light extraction efficiency, their height **H** is preferably not less than 1 um and not more than 100 um. Preferably, the plurality of internal spaces **14A, 14B, 64A, 64B** are distributed discretely and uniformly; for example, as shown in FIG. **14A****,** they are preferably disposed periodically. Their pitch **Px** is preferably e.g. not less than 10 um and not more than 500 µm, and their pitch **Py** is preferably e.g. not less than 10 um and not more than 500 µm.

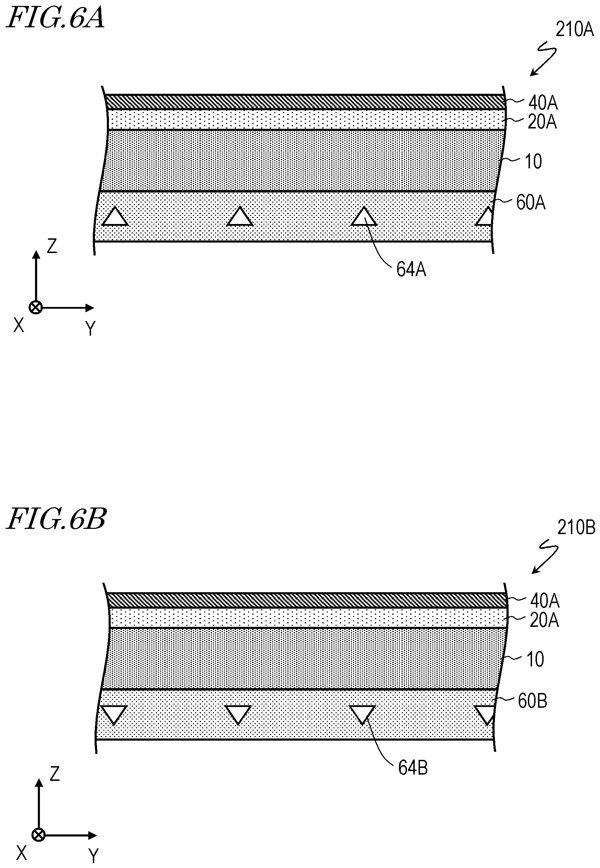

Next, with reference to FIG. **6A,** FIG. **6B****,** FIG. **7A,** FIG. **7B****,** and FIG. **8** to FIG. **11****,** other example configurations for a lightguide component according to an embodiment of the present invention will be described; however, these are not limiting, and they may be employed in various combinations.

In a lightguide component **210A** shown in FIG. **6A****,** the plurality of internal spaces **64A** formed in the second redirection layer **60A,** which is provided on the second principal face of the lightguide layer **10,** constitute a light distribution controlling structure (which may be referred to as a third light distribution controlling structure). The second redirection layer **60A** including the internal spaces **64A** at least directs a portion of light propagating in the lightguide layer **10** toward the first low-refractive index layer **20A** (the Z direction).

In a lightguide component **210B** shown in FIG. **6B****,** the plurality of internal spaces **64B** formed in the second redirection layer **60B,** which is provided on the second principal face of the lightguide layer **10,** constitute a light distribution controlling structure (which may be referred to as a third light distribution controlling structure). The second redirection layer **60B** including the internal spaces **64B** at least directs a portion of light propagating in the lightguide layer **10** in an opposite direction from the first low-refractive index layer **20A** (in the -Z direction).

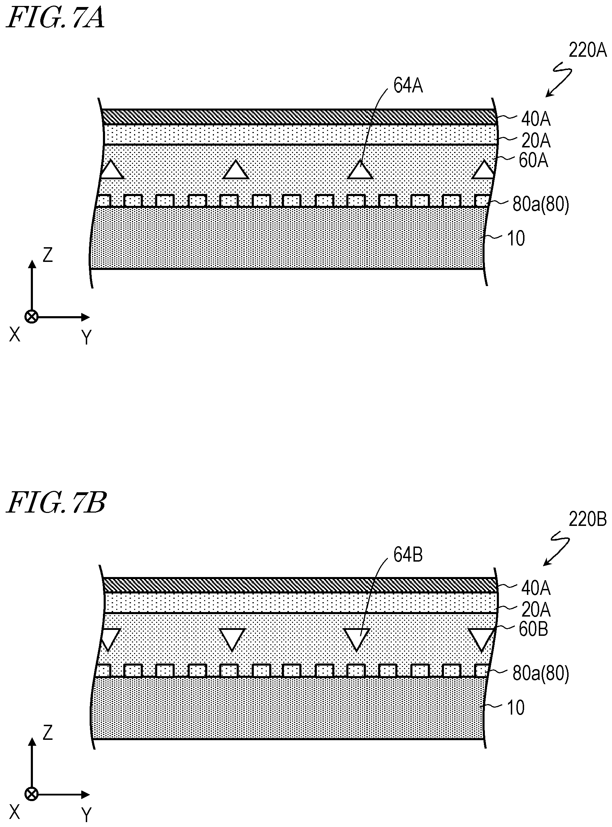

A lightguide component **220A** shown in FIG. **7A** further includes, in addition to the lightguide component **200A** shown in FIG. **5A****,** a first light coupling layer **80.** The first light coupling layer **80** is provided between the lightguide layer **10** and the first redirection layer **60A.** The first light coupling layer **80** includes a plurality of first low-refractive index regions **80a** having a refractive index n_{C1} which is smaller than the refractive index n_{GP} of the lightguide layer **10.** The first light coupling layer **80** composed of the plurality of first low-refractive index regions **80a** serves to guide the light propagating in the lightguide layer **10** more selectively and efficiently to the first redirection layer **60A.** The refractive index n_{C1} of the first low-refractive index regions **80a** is preferably not less than 1.05 and not more than 1.30, and more preferably not less than 1.05 and not more than 1.25.

A lightguide component **220B** shown in FIG. **7B** further includes, in addition to the lightguide component **200B** shown in FIG. **5B****,** a first light coupling layer **80.** The first light coupling layer **80** is provided between the lightguide layer **10** and the first redirection layer **60B.** The first light coupling layer **80** includes a plurality of first low-refractive index regions **80a** having a refractive index n_{C1} which is smaller than the refractive index n_{GP} of the lightguide layer **10.** The first light coupling layer **80** composed of the plurality of first low-refractive index regions **80a** serves to guide the light propagating in the lightguide layer **10** more selectively and efficiently to the first redirection layer **60B.**

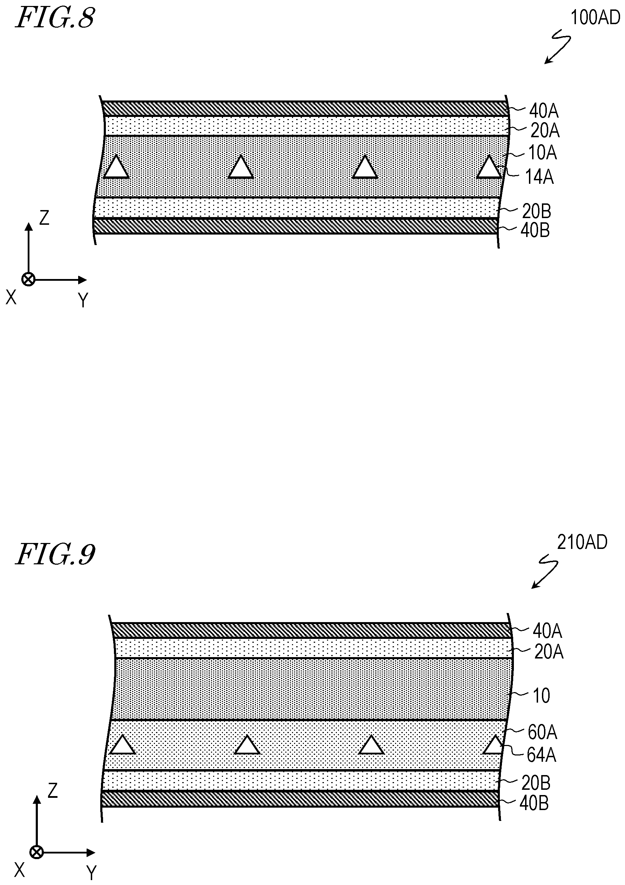

A lightguide component **100AD** shown in FIG. **8** further includes, in addition to the lightguide component **100A** shown in FIG. **1A****:** a second low-refractive index layer **20B** that is disposed at the second principal face side of the lightguide layer **10A,** the second low-refractive index layer **20B** having a refractive index n_{L2} which is smaller than the refractive index n_{GP} of the lightguide layer **10A;** and a second hard coat layer **40B** that is disposed at an opposite side of the second low-refractive index layer **20B** from the lightguide layer **10A,** the second hard coat layer **40B** having a hardness H_{H2} which is higher than the hardness H_{GP} of the lightguide layer **10A.** The second low-refractive index layer **20B** and the second hard coat layer **40B** may have similar characteristic features to those of the first low-refractive index layer **20A** and the first hard coat layer **40A,** respectively. By additionally providing the second low-refractive index layer **20B** and the second hard coat layer **40B** at the second principal face side of the lightguide layer **10A,** the aforementioned effect can also be obtained at the second principal face side. Because of including the lightguide layer **10A** in which the plurality of internal spaces **14A** are formed, the lightguide component **100AD** emits light in the Z direction. Instead of the lightguide layer **10A** of the lightguide component **100AD,** the lightguide layer **10B** including the plurality of internal spaces **14B** (see, for example, FIG. **1B**) may be disposed, whereby a lightguide component that emits light in the -Z direction can be obtained.

A lightguide component **210AD** shown in FIG. **9** further includes, in addition to the lightguide component **210A** shown in FIG. **6A****:** a second low-refractive index layer **20B** that is disposed at the second principal face side of the lightguide layer **10,** the second low-refractive index layer **20B** having a refractive index n_{L2}which is smaller than the refractive index n_{GP} of the lightguide layer **10;** and a second hard coat layer **40B** that is disposed at an opposite side of the second low-refractive index layer **20B** from the lightguide layer **10,** the second hard coat layer **40B** having pencil hardness H or higher. Because of including the second redirection layer **60A** in which the plurality of internal spaces **64A** are formed, the lightguide component **210AD** emits light in the Z direction. Instead of the second redirection layer 60A of the lightguide component **210AD,** the second redirection layer **60B** including the plurality of internal spaces **14B** (see, for example, FIG. **6B**) may be disposed, whereby a lightguide component that emits light in the -Z direction can be obtained.

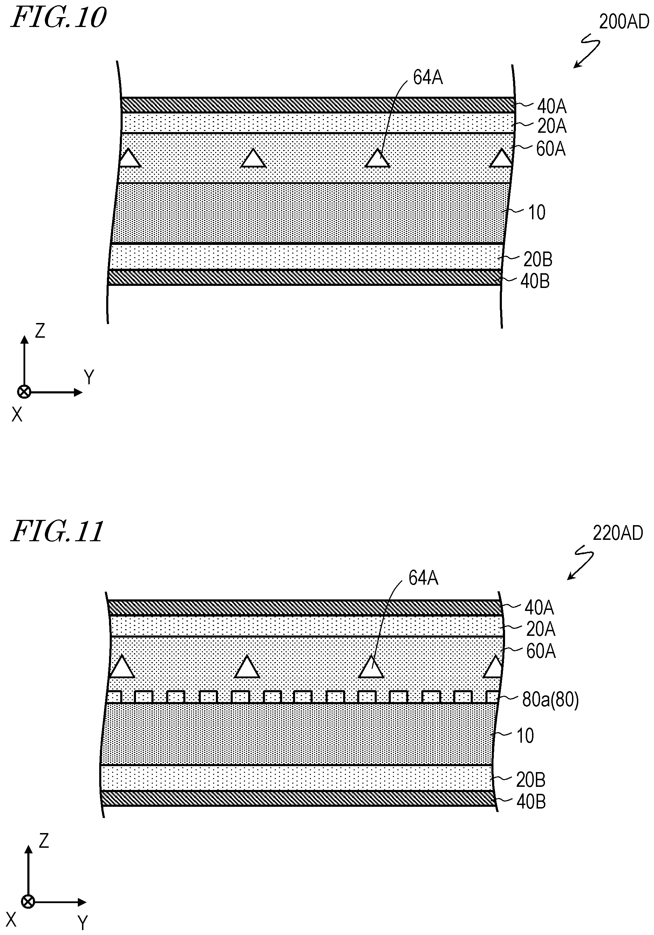

A lightguide component **200AD** shown in FIG. **10** further includes, in addition to the lightguide component **200A** shown in FIG. **5A****:** a second low-refractive index layer **20B** that is disposed at the second principal face side of the lightguide layer **10,** the second low-refractive index layer **20B** having a refractive index n_{L2} which is smaller than the refractive index n_{GP} of the lightguide layer **10;** and a second hard coat layer **40B** that is disposed at an opposite side of the second low-refractive index layer **20B** from the lightguide layer **10,** the second hard coat layer **40B** having a hardness H_{H2} which is higher than the hardness H_{GP} of the lightguide layer **10.** Because of including the second redirection layer **60A** in which the plurality of internal spaces **64A** are formed, the lightguide component **200AD** emits light in the Z direction. Instead of the second redirection layer **60A** of the lightguide component **200AD,** the second redirection layer **60B** (see, for example FIG. **5B**) including the plurality of internal spaces **64B** may be disposed, whereby a lightguide component that emits light in the -Z direction can be obtained.

A lightguide component **220AD** shown in FIG. **11** further includes, in addition to the lightguide component **220A** shown in FIG. **7A****:** a second low-refractive index layer **20B** that is disposed at the second principal face side of the lightguide layer **10,** the second low-refractive index layer **20B** having a refractive index n_{L2} which is smaller than the refractive index n_{GP} of the lightguide layer **10;** and a second hard coat layer **40B** that is disposed at an opposite side of the second low-refractive index layer **20B** from the lightguide layer **10,** the second hard coat layer **40B** having a hardness H_{H2} which is higher than the hardness H_{GP} of the lightguide layer **10.** Because of including the second redirection layer **60A** in which the plurality of internal spaces **64A** are formed, the lightguide component **220AD** emits light in the Z direction. Instead of the second redirection layer **60A** of the lightguide component **220AD,** the second redirection layer **60B** (see, for example FIG. **7B**) including the plurality of internal spaces **64B** may be disposed, whereby a lightguide component that emits light in the -Z direction can be obtained.

A lightguide component according to an embodiment of the present invention can be modified in various manners. For example, particles may be admixed to a material(s) for making the first hard coat layer and/or the second hard coat layer to obtain an antiglare hard coat layer(s) having a concavo-convex surface. This also allows for controlling the haze value of the lightguide component. For example, the particles may be inorganic particles or organic particles. Examples of inorganic particles include, without limitation, silicon oxide particles, titanium oxide particles, aluminum oxide particles, zinc oxide particles, tin oxide particles, calcium carbonate particles, barium sulfate particles, talc particles, kaolin particles, and calcium sulfate particles. Examples of organic particles include, without limitation, polymethyl methacrylate resin powder (PMMA particles), silicone resin powder, polystyrene resin powder, polycarbonate resin powder, acrylic styrene resin powder, benzoguanamine resin powder, melamine resin powder, polyolefin resin powder, polyester resin powder, polyamide resin powder, polyimide resin powder, and polyfluoroethylene resin powder. Any one kind of such inorganic particles or organic particles may be used alone, or two or more of them may be used in combination.

From the standpoint of being able to confer good antiglare properties, the mass average particle size of the particles to be mixed to material(s) for making the first hard coat layer and/or the second hard coat layer is preferably in the range of not less than 0.5 um and not more than 8.0 um. The mass average particle size of the particles is more preferably in the range of not less than 2.0 um and not more than 6.0 um, and still more preferably in the range of not less than 3.0 um and not more than 6.0 um. Moreover, the mass average particle size of the particles is preferably in the range of not less than 30% and not more than 80% of the thickness of the first hard coat layer and/or second hard coat layer. The mass average particle size of the particles can be measured by the Coulter counter method. For example, with a grain size distribution measurement apparatus that utilizes the pore electric resistance method (product name: Coulter Multisizer, manufactured by Beckman Coulter), the number and volume of particles are measured by measuring the electric resistance of the electrolytic solution, which corresponds to the volume of particles as they pass through the pores, whereby the mass average particle size is calculated.

The shape of the particles is not particularly limited, and may be an essentially-spherical bead shape, or any indefinite shape, e.g., powder, for example. However, they are preferably essentially spherical, and more preferably are essentially spherical microparticles with an aspect ratio of 1.5 or less, and most preferably are spherical particles.

The particles are to be blended at a ratio preferably in a range of not less than 5 mass parts and not more than 20 mass parts, and more preferably in a range of not less than 5 mass parts and not more than 17 mass parts, with respect to 100 mass parts of the material for making the hard coat layer. An antiglare hard coat layer described in Japanese Laid-Open Patent Publication No. 2013-178534 can be suitably used, for example. The entire disclosure of Japanese Laid-Open Patent Publication No. 2013-178534 is incorporated herein by reference.

Furthermore, as an outermost layer(s) of the lightguide component, an anti-soiling layer(s) which is water repellent and/or oil repellent (hydrophilic) may be provided on one or both of its principal faces. The configuration of the anti-soiling layer(s) is to be appropriately selected depending on the application. The anti-soiling layer is formed by using known materials. As the material composing the anti-soiling layer(s), a silicone-based compound or a fluorine-containing compound is preferable. Among others, fluorine-containing compounds excel in water repellency and exhibit high soil resistance; particularly preferably are fluorine-based polymers containing a perfluoropolyether skeleton. From the standpoint of enhancing soil resistance, perfluoropolyether, which has a main chain structure that permits rigid parallel construction, is especially preferable. As structural units of the main chain skeleton of perfluoropolyether, perfluoroalkylene oxides which may have branches of 1 to 4 carbons are preferable, e.g., perfluoromethylene oxide (-CF₂O-), perfluoroethylene oxide (-CF₂CF₂O-), perfluoropropylene oxide (-CF₂CF₂CF₂O-), and perfluoroisopropylene oxide (-CF(CF₃)CF₂O-).

The thickness of the anti-soiling layer(s) is preferably not less than 3 nm and not more than 15 nm, and more preferably not less than 3 nm and not more than 10 nm.

As the method of forming the anti-soiling layer(s), depending on the material used for forming it, physical vapor deposition techniques such as vapor deposition or sputtering, chemical vapor deposition techniques, wet coating methods such as reverse coating, die coating, and gravure coating, or the like may be used. For example, an anti-soiling layer described in Japanese Laid-Open Patent Publication No. 2020-067582 can be suitably used. The entire disclosure of Japanese Laid-Open Patent Publication No. 2020-067582 is incorporated herein by reference.

An anti-reflection layer may be formed at the lightguide layer side of the anti-soiling layer(s). An example of an anti-reflection layer may be a multilayer stack including multiple thin films of different refractive indices. Examples of the material of a thin film(s) composing an anti-reflection layer include oxides, nitrides, fluorides, and the like of metals.

The anti-reflection layer(s) is preferably an alternating stack of high-refractive index layers and low-refractive index layers. The high-refractive index layers may have a refractive index of 1.9 or more, and preferably 2.0 or more, for example. Examples of high-refractive index materials include titanium oxide, niobium oxide, zirconium oxide, tantalum oxide, zinc oxide, indium oxide, indium tin oxide (ITO), and antimony-doped tin oxide (ATO). Among them, titanium oxide or niobium oxide is preferable. The low-refractive index layers have a reflective index of 1.6 or less, and preferably 1.5 or less, for example. Examples of low-refractive index materials include silicon oxide, titanium nitride, magnesium fluoride, barium fluoride, calcium fluoride, hafnium fluoride, and lanthanum fluoride. Among others, silicon oxide is preferable. It is particularly preferable to alternately stack niobium oxide (Nb₂O₅) thin films as high-refractive index layers and silicon oxide (SiO₂) thin films as low-refractive index layers. Instead of low-refractive index layers and high-refractive index layers, medium-refractive index layers with refractive indices of approximately 1.6 to 1.9 may be provided.

The film thickness of each high-refractive index layer and each low-refractive index layer is approximately not less than 5 nm and not more than 200 nm, and preferably approximately not less than 15 nm and not more than 150 nm. Depending on the refractive index, the stack configuration, or the like, the film thickness of each layer may be designed so as to reduce reflectance for visible light.

The anti-reflection layer(s) is preferably layered onto the hard coat layer(s) via a primer layer. Examples of materials to compose the primer layer(s) include metals such as silicon, nickel, chromium, tin, gold, silver, platinum, zinc, titanium, tungsten, aluminum, zirconium, and palladium; alloys of such metals; and oxides, fluorides, sulfides or nitrides of such metals. Among others, the material of the primer layer(s) is preferably an oxide, and especially preferably silicon oxide. The primer layer(s) is preferably an inorganic oxide layer(s) having less oxygen than in the stoichiometric composition. Among inorganic oxides of non-stoichiometric compositions, a silicon oxide which is expressed by the composition formula SiOx (0.5≦x<2) is preferable. The thickness of the primer layer(s) is e.g. approximately not less than 1 nm and not more than 20 nm, and preferably not less than 3 nm and not more than 15 nm.

There is no limitation as to the method of forming the thin film(s) composing the anti-reflection layer(s), and either a wet coating method or a dry coating method can be used. Dry coating methods such as vacuum evaporation, CVD, sputtering, and electron beam vapor deposition are preferable because these can form a thin film with a uniform film thickness. Among others, sputtering techniques are preferable because they can form a film which excels in film thickness uniformity and which is dense in texture. For example, an anti-reflection layer described in Japanese Laid-Open Patent Publication No. 2020-52221 can be suitably used. The entire disclosure of Japanese Laid-Open Patent Publication No. 2020-52221 is incorporated herein by reference.

Hereinafter, with reference to illustrative Examples, lightguide components for illumination devices according to an embodiment of the present invention will be described in more detail.

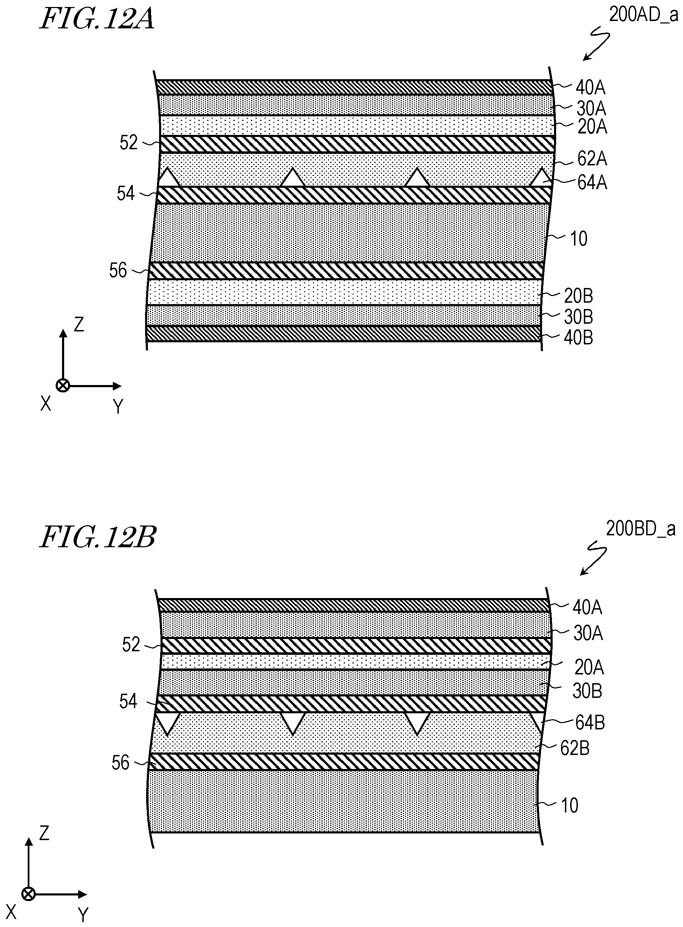

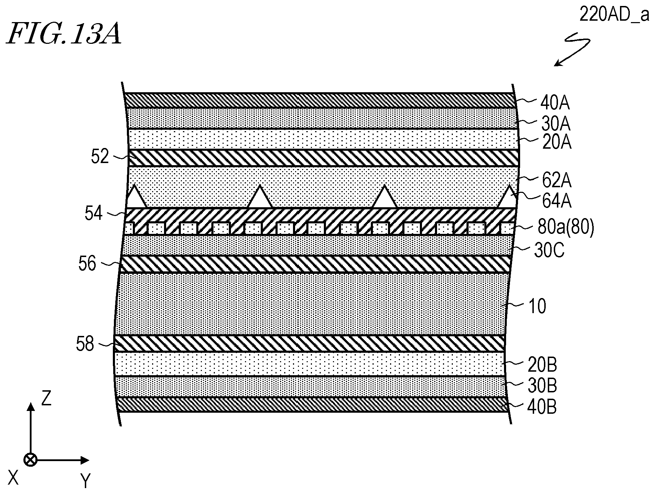

In Examples, lightguide components **200AD_a** and **220AD_a** having a cross-sectional structure as shown in FIG. **12A** and FIG. **13A** were produced. The lightguide component **200AD_a** shown in FIG. **12A** substantially corresponds to the lightguide component **200AD** shown in FIG. **10****,** whereas the lightguide component **220AD_a** shown in FIG. **13A** substantially corresponds to the lightguide component **220AD** shown in FIG. **11****.**

In addition to the lightguide component **200AD** shown in FIG. **10****,** the lightguide component **200AD_a** shown in FIG. **12A** includes base layers **30A** and **30B** and adhesive layers **52, 54** and **56.** In the lightguide component **200AD_a**, the first redirection layer **60A** of the lightguide component **200AD** is composed of a textured film **62** shown in FIG. **14A** and FIG. **14B** and the adhesive layer **54** (and optionally also the adhesive layer **52**)**.** In other words, a structure substantially corresponding to the first redirection layer **60A** is obtained by disposing a textured film **62A** so that recesses **64** in the textured film **62** as shown in FIG. **14B** create the internal spaces **64A** together with the adhesive layer **54.**

Similarly, a lightguide component **200BD_a** shown in FIG. **12B** is obtained by disposing a textured film **62B** so that recesses **64** in the textured film **62** as shown in FIG. **14B** create internal spaces **64B** together with the adhesive layer **54.** Note that the base layers **30A, 30B** and **30C** serve to support the first low-refractive index layer **20A,** the second low-refractive index layer **20B,** the first hard coat layer **40A,** or the second hard coat layer **40B,** for example. The positional relationship between the base layers **30A, 30B** and **30C** and the first low-refractive index layer **20A,** second low-refractive index layer **20B,** and first hard coat layer **40A** and second hard coat layer **40B** may be appropriately changed. For example, in the lightguide component **200AD_a,** the first low-refractive index layer **20A** is supported by the base layer **30A,** but in the lightguide component **200BD_a,** the first low-refractive index layer **20A** is supported by the base layer **30B.**

In addition to the lightguide component **220AD** shown in FIG. **11****,** the lightguide component **220AD_a** shown in FIG. **13A** includes base layers **30A, 30B** and **30C** and adhesive layers **52, 54, 56** and **58.** In the lightguide component **220AD_a,** the first redirection layer **60A** of the lightguide component **220AD** is composed of the textured film **62** shown in FIG. **14A** and FIG. **14B** and the adhesive layer **54** (and optionally also the adhesive layer **52**)**.** In other words, a structure substantially corresponding to the first redirection layer **60A** is obtained by disposing a textured film **62A** so that recesses **64** in the textured film **62** as shown in FIG. **14B** create internal spaces **64A** together with the adhesive layer **54.**

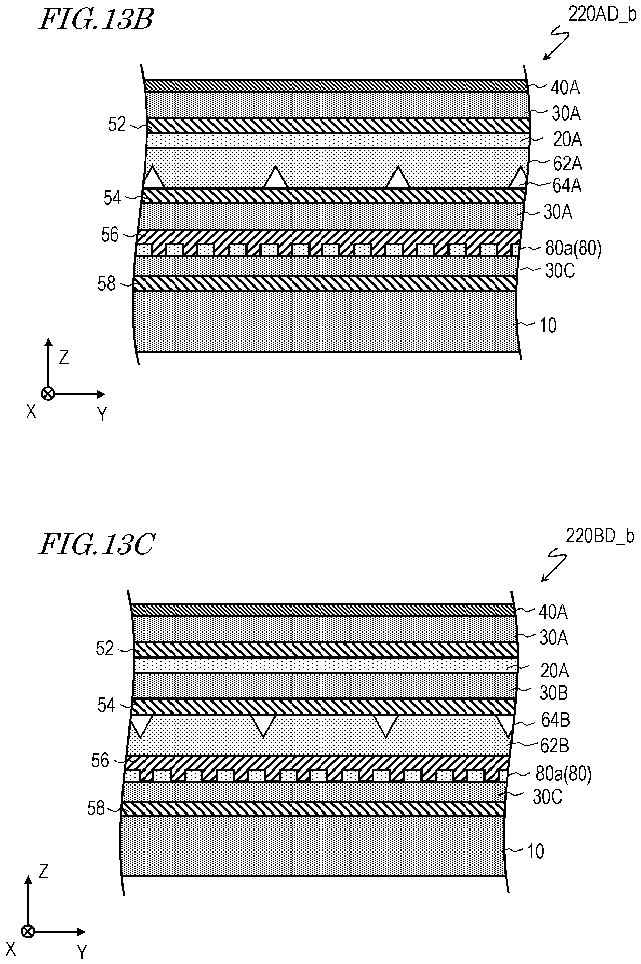

Alternatively, a structure substantially corresponding to the first redirection layer **60A** may be obtained by, as in a lightguide component **220AD_b** shown in FIG. **13B****,** disposing a textured film **62A** on the base layer **30B** so that recesses **64** in the textured film **62** as shown in FIG. **14B** create internal spaces **64A** together with the adhesive layer **54.** Similarly, a lightguide component **220BD_a** shown in FIG. **13C** is obtained by disposing a textured film **62B** so that recesses **64** in the textured film **62** as shown in FIG. **14B** create internal spaces **64B** together with the adhesive layer **54.**

As used herein, "adhesive" is meant to include pressure-sensitive adhesives (also called tackiness agents). Specific examples of adhesives include rubber-based adhesives, acrylic adhesives, silicone-based adhesives, epoxy-based adhesives, cellulose-based adhesives, and polyester-based adhesives. These adhesives may be used each alone, or two or more of them may be used in combination.

When a porous material (e.g., a gel made from a silicon compound) is used as the low-refractive index layers, their strength will be low, i.e., brittle. For this reason, the base layers (e.g., acrylic films) are used, such that the low-refractive index layers **20A** and **20B** and the low-refractive index regions **80a** are formed on these base layers.

In order to mass produce the lightguide component by a roll-to-roll method or a roll-to-sheet method, a configuration was adopted in which stacks, being layered upon a plurality of base layers, were attached together with an adhesive layer(s). Moreover, a configuration corresponding to the first redirection layer **60A** (FIG. **10,** FIG. **11**) including the plurality of internal spaces **64A** was constructed with the textured film **62** including recesses **64** and with the adhesive layer **54.**

The thicknesses of the base layers **30A, 30B** and **30C** are, each independently, e.g. not less than 1 um and not more than 1000 µm, preferably not less than 10 um and not more than 100 µm, and more preferably not less than 20 um and not more than 80 um. The refractive indices of the base layers **30A, 30B** and **30C** are, each independently, preferably not less than 1.40 and not more than 1.70, and more preferably not less than 1.43 and not more than 1.65.

The thicknesses of the adhesive layers **52, 54, 56** and **58** are, each independently, e.g. not less than 0.1 um and not more than 100 µm, preferably not less than 0.3 um and not more than 100 µm, and more preferably not less than 0.5 um and not more than 50 um. The refractive indices of the adhesive layers **52, 54, 56** and **58** are, each independently, preferably not less than 1.42 and not more than 1.60, and more preferably not less than 1.47 and not more than 1.58. Moreover, the refractive indices of the adhesive layers **52**, **54**, **56** and **58** are preferably close to the refractive index of the lightguide layer **10** or the textured film **62** that they are in contact with, and preferably the difference in refractive index has a absolute value of 0.2 or less.

### [Examples]

The methods for measuring the respective properties are as follows.

### [refractive index]

After forming a low-refractive index layer on an acrylic film, it was cut into a 50 mm × 50 mm size, and this was attached onto the surface of a glass plate (thickness: 3 mm) with a pressure-sensitive adhesive layer. A central portion of the rear face (diameter: approximately 20 mm) of the glass plate was painted with black magic marker, thereby preparing a sample that was not reflective on the rear face of the glass plate.

The above sample was set on an ellipsometer (manufactured by J. A. Woollam Japan; product name: VASE), and refractive index measurements were taken under the conditions of a 550 nm wavelength and an incident angle of not less than 50 degrees and not more than 80 degrees; and a mean value thereof was defined as its refractive index. Unless otherwise specified, the refractive index in the meaning of the present specification is based on this definition.

### [scratch resistance]

A steel wool test (ϕ 25 mm) with a 100 g load × 10 round trips was performed, and the presence of scratches was visually checked. The evaluation was given as ○ (Good) when no scratches were visible, and × (NG) when scratches were visible.

### [soil resistance]

A coat of oil-based magic marker (manufactured by ZEBRA CO., LTD.; product name: Mckee ultra-fine) was applied to the light-outgoing surface of the lightguide component, and an ○ evaluation was given if the ink was visually repelled, and an × evaluation was given if the ink sat with the surface and was not repelled.

### [haze value]

The sample was cut into a 50 mm ×50 mm size, and its haze value was measured with a haze meter (manufactured by MURAKAMI COLOR RESEARCH LABORATORY CO.,LTD.; product name: HM-150).

### [visible light transmittance]

The visible light transmittance of the sample was defined as a mean value of visible light transmittances at respective wavelengths when measurements were taken at measuring wavelengths of not less than 380 nm and not more than 780 nm by using a spectrophotometer. Herein, visible light transmittance was also measured by using the aforementioned haze meter.

### [Manufacturing Example 1]

### Production of concavo-convex textured film

A concavo-convex textured film was produced according to a method described in Japanese National Phase PCT Laid-Open Publication No. 2013-524288. Specifically, the surface of a polymethyl methacrylate (PMMA) film was coated with a lacquer (manufactured by Sanyo Chemical Co., FINECURE RM-64); an optical pattern was embossed on the film surface including the lacquer; and thereafter the lacquer was cured to produce the concavo-convex textured film of interest. The concavo-convex textured film had a total thickness of 130 um and a haze of 0.8%.

A plan view of a portion of the produced concavo-convex textured film, as seen from the concavo-convex surface side, is shown in FIG. **14A**. Also, a **14B-14B'** cross-sectional view of the concavo-convex textured film of FIG. **14A** is shown in FIG. **14B**. A plurality of recesses, having a length **L** of 80 µm, a width **W** of 14 um, and a depth **H** of 10 um, and having a triangular cross-section, were disposed at intervals of a width **E** (155 um) along the X direction. Furthermore, patterns of such recesses were disposed at intervals of a width **D** (100 um) along the Y direction. The recesses had a density of 3612/cm² on the concavo-convex textured film surface. In FIG. **15**, **θa** and **θb** were both 41°, and the recesses had a occupied area percentage of 4.05% in a plan view of the film as seen from the concavo-convex surface side.

### [Manufacturing Example 2]

### Preparation of coating solution for forming low-refractive index layer

This was produced according to the description of International Publication No. WO/2019/026865. Specifically, it was as follows.

### (1) gelation of silicon compound

To 2.2 g of dimethyl sulfoxide (DMSO), 0.95 g of methyltrimethoxysilane (MTMS) as a precursor of the gelatinous silicon compound was dissolved to prepare Mixture A. To this Mixture A, 0.5 g of 0.01 mol/L oxalic acid aqueous solution was added, and stirred at room temperature for 30 minutes to hydrolyze the MTMS, thereby producing Mixture B containing tris(hydroxy)methylsilane.

To 5.5 g of DMSO, 0.38 g of 28 mass% ammonia and 0.2 g of pure water were added, after which the aforementioned Mixture B was further added, and stirred at room temperature for 15 minutes, thereby effecting gelation of the tris(hydroxy)methylsilane, whereby Mixture C containing a gelatinous silicon compound was obtained.

### (2) aging process

Mixed solution C, containing the gelatinous silicon compound as prepared above, was incubated as it was at 40°C for 20 hours, thereby effecting an aging process.

### (3) pulverization process

Next, the gelatinous silicon compound that had undergone the aging process as described above was crushed into granules of several millimeters to several centimeters in size, using a spatula. Next, 40 g of isopropyl alcohol (IPA) was added to Mixture C, and this was stirred lightly and allowed to stand at room temperature for 6 hours, thereby decanting the solvent and catalyst in the gel. The same decantation process was performed three times to replace the solvent, whereby Mixture D was obtained. Next, the gelatinous silicon compound in Mixture D was subjected to a pulverization process (high-pressure media-less pulverization). For the pulverization process (high-pressure media-less pulverization), a homogenizer (manufactured by S.M.T.; product name: "UH-50") was used. Into a 5-cc screw bottle, 1.85 g of the gelatinous compound in Mixture D and 1.15 g of IPA were weighed, after which pulverization was performed at 50 W, 20 kHz for 2 minutes.

This pulverization process pulverized the gelatinous silicon compound in the above Mixture D, and thus Mixture D' resulted which was a sol solution of the pulverized material. The volume-averaged particle size, which indicates the grain size variation of the pulverized material in Mixture D', was confirmed using a dynamic light scattering Nanotrac particle size analyzer (manufactured by Nikkiso Co., Ltd.; UPA-EX150) to be 0.50 to 0.70. Furthermore, to 0.75 g of this sol solution (Mixture C'), 0.062 g of a 1.5 mass% concentration MEK (methyl ethyl ketone) solution of a photobase generator (Wako Pure Chemical Industries, Ltd.; product name: WPBG266), and 0.036 g of a 5% concentration MEK solution of bis(trimethoxysilyl) ethane were added, whereby a coating solution for forming a low-refractive index layer (micropored particle-containing solution) was obtained.

### [Manufacturing Example 3]

### Preparation of hard coat (HC) layer coating solution

This was produced by referring to the production method described in Japanese Laid-Open Patent Publication No. 2011-237789. Specifically, it was as follows.

To a resin solution (manufactured by DIC, product name "UNIDIC 17-806"; solid concentration: 80%) in which a UV-curable resin monomer or oligomer containing urethane acrylate as a main component was dissolved in butyl acetate, 5 parts of photopolymerization initiator (product name "IRGACURE906", manufactured by BASF) and 0.5 parts of leveling agent (product name "GRANDIC PC4100", manufactured by DIC) were added with respect to 100 parts of the solution in solid content. Then, butyl acetate was added to the above solution so that the solid concentration in the above solution was 75%. Furthermore, cyclopentanone was added to the above solution so that the solid concentration in the above solution became 50%. Thus, the HC layer coating solution for forming the HC layer was prepared.

### [Manufacturing Example 4]

### Formation of adhesive A layer (adhesive layer 54)

Through the following procedure, an adhesive A layer was formed. The adhesive A layer can achieve bonding without burying the recesses on the surface.

### (1) preparation of adhesive A solution

By using a four-necked flask equipped with stirring blades, a thermometer, a nitrogen gas inlet tube, and a cooler, 95.0 mass parts of n-butyl acrylate, 5.0 mass parts of acrylic acid, and 0.2 mass parts of 2,2'-azobisisobutyronitrile as a polymerization initiator were placed in the flask together with ethyl acetate, so that the total of monomers was 40.0 mass%. After nitrogen replacement for 1 hour by introducing nitrogen gas with gentle stirring, the liquid temperature in the flask was kept at around 63°C and the polymerization reaction was carried out for 6 hours. Thereafter, ethyl acetate was added to result in a solid content of 40 mass%, whereby an acrylic polymer was obtained as an acrylic polymer solution. Then, in the resultant acrylic polymer solution, with respect to 100 mass parts of the polymerization product in solid content, 6.0 mass parts of 1,3-bis(N,N-diglycidylaminomethyl) cyclohexane (product name: "TETRAD-C", manufactured by Mitsubishi Gas Chemical Company, Inc.) as a cross-linking agent were blended, thereby preparing an adhesive A solution.

### (2) formation of adhesive A layer

On one side of a 38 um polyethylene terephthalate (PET) film (product name: "MRF38", manufactured by Mitsubishi Chemical Corporation) and having been silicone release-treated, the adhesive A solution was applied so that the adhesive layer had a thickness of 1 um after drying, and dried at 150°C for 3 minutes, whereby an adhesive A layer was formed. It had a refractive index of 1.47.

### [Manufacturing Example 5]

### Formation of adhesive B layer (adhesive layer 52, 56, 58)

An adhesive B layer was formed by referring to the production method described in Japanese Laid-Open Patent Publication No. 2018-136401. Specifically, it was as follows.

### (1) preparation of acrylic polymer

A monomer mixture containing 82 parts of butyl acrylate, 15 parts of benzyl acrylate, and 3 parts of 4-hydroxybutyl acrylate was placed in a four-necked flask equipped with stirring blades, a thermometer, a nitrogen gas inlet tube, and a cooler. Furthermore, with respect to 100 parts of the aforementioned monomer mixture (solid content), 0.1 mass parts of 2,2'-azobisisobutyronitrile as a polymerization initiator were placed together with ethyl acetate. After nitrogen replacement by introducing nitrogen gas with gentle stirring, the liquid temperature in the flask was kept at around 60°C and the polymerization reaction was carried out for 7 hours. Thereafter, ethyl acetate was added to the resultant reaction solution for adjusting the solid concentration to 30%, whereby an acrylic polymer solution having a mass average molecular weight of 1,000,000 was prepared.

### (2) preparation of adhesive B solution

With respect to 100 parts of the acrylic polymer solution in solid content obtained as above, 0.002 parts of lithium bis(trifluoromethanesulfonyl)imide (Japan Carlit Co., Ltd.) were blended, and further, 0.1 parts of trimethylolpropane xylylenediisocyanate (Mitsui Chemicals, Inc.: TAKENATE D110N), 0.3 parts of dibenzoyl peroxide, 0.075 parts of γ-glycidoxypropyl methoxysilane (Shin-Etsu Chemical Co., Ltd.: KBM-403), and 0.5 parts of Silyl SAT10 (number average molecular weight: 4000) manufactured by KANEKA CORPORATION were blended to prepare an adhesive B solution.

### (3) formation of adhesive B layer

By using an applicator, the surface of a PET film releasing base having been treated with a silicone-based release agent (manufactured by Mitsubishi Plastics, Inc.; MRF38CK) was uniformly coated with the adhesive B solution obtained as above, and dried for 2 minutes in an air circulation-type constant temperature oven at 155°C, whereby an adhesive B layer was formed. The adhesive B layer had a refractive index of 1.47, and a thickness of 10 µm.

### Example 1

### (1) production of lightguide component

The lightguide component **200AD_a** shown in FIG. **12A** was produced.

The adhesive A layer formed in Manufacturing Example 4 was attached onto the onto the concavo-convex surface of the concavo-convex textured film according to Manufacturing Example 1 by using a hand roller, whereby a stack of concavo-convex textured film/adhesive A layer/PET film was obtained. Next, after removing the PET film from the stack, the stack was attached onto an acrylic panel (manufactured by Mitsubishi Chemical Corporation; product name: Acrylite (Shinkolite)) having a thickness of 5 mm, a width of 120 mm, and a length of 700 mm by using a hand roller, whereby a stack of concavo-convex textured film/adhesive A layer/lightguide layer was obtained.

The HC layer coating solution prepared in Manufacturing Example 3 was applied onto one side of an acrylic film (base layer) having a refractive index 1.51 and a thickness of 40 um with a wire bar; after 1 minute of drying at 80°C, this was subjected to a UV irradiation at a light irradiation amount (energy) of 300 mJ/cm², with light having a wavelength of 360 nm, whereby a stack of HC layer/acrylic film was obtained. Herein, the HC layer had a thickness of 5 um. The HC layer had a refractive index of 1.52.

On the acrylic film side of the stack of HC layer/acrylic film, the low-refractive index layer coating solution prepared in Manufacturing Example 2 was applied, and treated at a temperature of 100°C for 1 minute for drying; furthermore, the dried coating layer was subjected to a UV irradiation at a light irradiation amount (energy) of 300 mJ/cm², with light having a wavelength of 360 nm, whereby a stack of HC layer/acrylic film/low-refractive index layer was obtained. Herein, the low-refractive index layer had a refractive index of 1.15 (thickness: 1 um).

To the low-refractive index layer side of the stack of HC layer/acrylic film/low-refractive index layer thus prepared, the adhesive B layer produced in Manufacturing Example 5 was attached, whereby a stack of HC layer/acrylic film/low-refractive index layer/adhesive B layer/PET film was obtained. Two such stacks were prepared. After removing the PET film of each stack, the stacks were attached onto both sides of the stack of concavo-convex textured film/adhesive A layer/lightguide layer produced above, whereby a lightguide component of interest was produced.

### (2) production of illumination device

At a lateral side of the lightguide layer of the lightguide component, an LED line light source (manufactured by NICHIA CORPORATION; 0.4 mm thick, equipped with a sideview) was placed, whereby an illumination device was produced. Lighting was tested at 12 V.

### Example 2

### (1) production of lightguide component

The lightguide component **220AD_a** shown in FIG. **13A** was produced.

On one side of an acrylic film having a refractive index of 1.51 and a thickness of 40 um, a mask plate having holes in predetermined regions was placed, and this was coated with the coating solution for forming a low-refractive index layer according to Manufacturing Example 2. The mask plate used at this time ensured that, in the resultant light coupling layer **80**, the low-refractive index regions **80a** would be denser toward the light source (i.e., essentially all low-refractive index regions **80a**) and sparser (i.e., more regions lacking the low-refractive index regions **800a**) away from the light source. The coating layer after drying was subjected to a UV irradiation at a light irradiation amount (energy) of 300 mJ/cm², with light having a wavelength of 360 nm, and the mask plate was removed, whereby the low-refractive index regions **80a** were formed. A plan view of the resultant low-refractive index regions **80a** is shown in FIG. **16**. The dots in the figure represent portions that are coated with the coating solution for forming a low-refractive index layer (although there also exists some patterned layer in the portions surrounded by broken lines, this is omitted from the figure). The dots are sized e.g. not less than 1 um and not more than 1000 um. By providing such a light coupling layer **80**, the occupied area percentage of the recesses (internal spaces **14A**, **64A**) in the textured film can be kept uniform across the entire surface.

To this patterned layer, the adhesive A solution was applied, whereby a stack of acrylic film/patterned layer of low-refractive index material/adhesive A layer was obtained. Furthermore, the concavo-convex surface of the concavo-convex textured film was attached onto the adhesive A layer of the stack, whereby a stack of acrylic film/patterned layer of low-refractive index material/adhesive A layer/concavo-convex textured film was obtained.

To the concavo-convex textured film side of the stack of acrylic film/patterned layer of low-refractive index material/adhesive A layer/concavo-convex textured film, the adhesive B layer in the stack of HC layer/acrylic film/low-refractive index layer/adhesive B layer produced in Example 1 was attached, whereby a stack of HC layer/acrylic film/low-refractive index layer/adhesive B layer/concavo-convex textured film/adhesive A layer/patterned layer of low-refractive index material/acrylic film was obtained.

Furthermore, the stack and the lightguide layer were attached together so that the lightguide layer and the acrylic film were opposed to each other via the adhesive B layer, whereby a stack of HC layer/acrylic film/low-refractive index layer/adhesive B layer/concavo-convex textured film/adhesive A layer/patterned layer of low-refractive index material/acrylic film/adhesive B layer/lightguide layer was obtained. To the lightguide layer side of the stack, the adhesive B layer in the stack of HC layer/acrylic film/low-refractive index layer/adhesive B layer produced in Example 1 was attached, whereby a lightguide component of interest was produced.

### (2) production of illumination device

An illumination device was produced in a similar manner to Example 1(2).

### Comparative Example 1

### (1) production of lightguide component

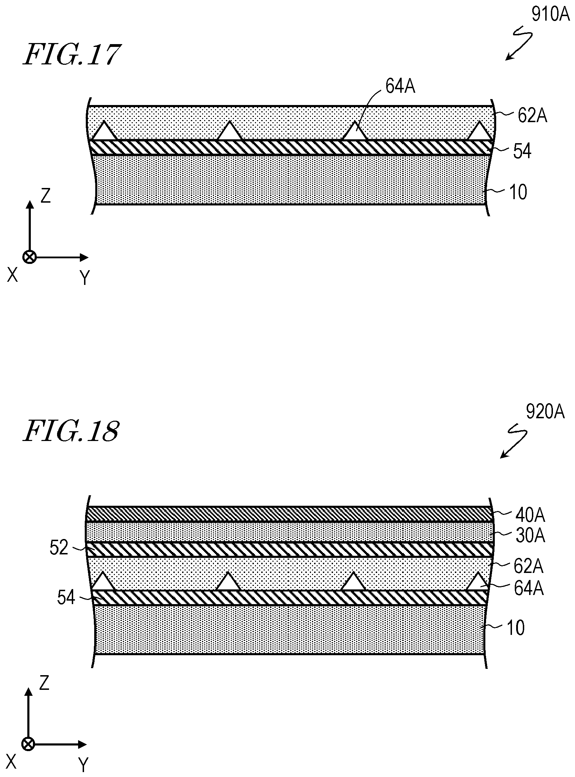

A schematic diagram of a lightguide component **910A** according to Comparative Example 1 is shown in FIG. **17**.

The adhesive B layer according to Manufacturing Example 5 was attached at an opposite side of the concavo-convex textured film according to Manufacturing Example 1 from the concavo-convex surface. Thereafter, after removing the adhesive B layer from the PET film, the adhesive B layer was attached onto the lightguide layer, whereby a lightguide component of interest was produced.

### (2) production of illumination device

An illumination device was produced in a similar manner to Example 1(2).

### Comparative Example 2

### (1) production of lightguide component

A schematic diagram of a lightguide component **920A** according to Comparative Example 2 is shown in FIG. **18**.

The concavo-convex textured film side of the stack of concavo-convex textured film/adhesive A layer/lightguide layer produced in Example 1 and the adhesive B layer in the stack of HC layer/acrylic film/adhesive B layer were attached together, whereby a lightguide component of interest was produced.

### (2) production of illumination device

An illumination device was produced in a similar manner to Example 1(2).

### Comparative Example 3

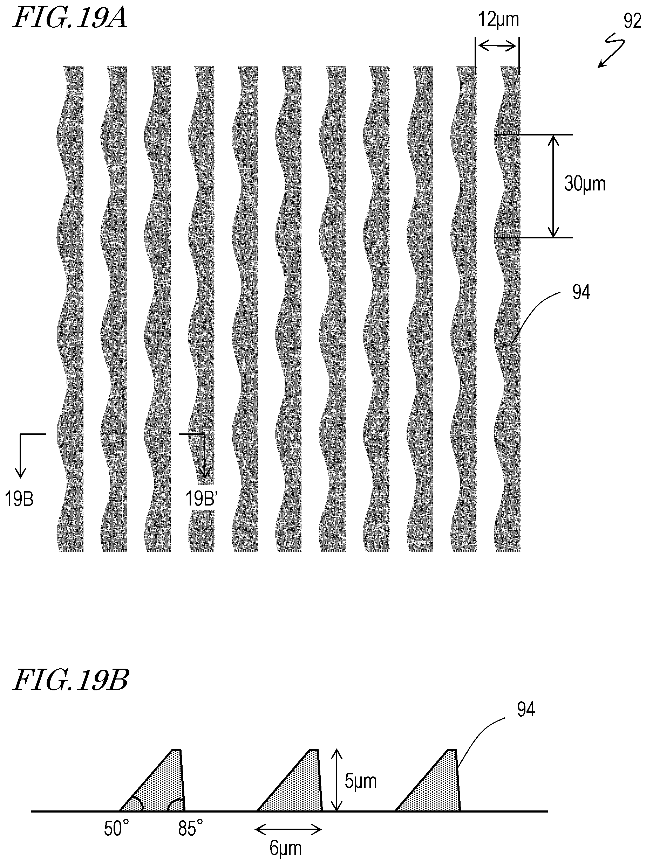

A lightguide component and an illumination device was produced in similar manners to Example 1, except for using the concavo-convex textured film disclosed in FIG. 10(B) of Patent Document 2 instead of the concavo-convex textured film used in Example 1. A plan view of a portion of the concavo-convex textured film **92** used, as seen from the concavo-convex surface side, is shown in FIG. **19A**. Moreover, a cross-sectional view along **19B-19B'** in FIG. **19A** is shown in FIG. **19B**. When the concavo-convex textured film **92** was viewed from the concavo-convex surface side, the recesses **94** accounted for a 61% area with respect to the overall area of the concavo-convex textured film **92**.

### [checking leakage of light]

For the illumination devices according to Examples 1 and 2, as well as Comparative Examples 1, 2 and 3, scratches and leakage of light around any dirt were visually checked before and after a scratch resistance test, and before and after a soil resistance test. An ○ evaluation was given to the case where there was no leakage of light, and an × evaluation was given to the case where there was some leakage of light.

### [checking light uniformity]

In a central portion of the light-outgoing surface of the lightguide component, a 10 mm wide and 120 mm long piece of black tape (vinyl tape manufactured by NITTO DENKO CORPORATION) was attached, and a luminance at a position 30 mm away from the light source and a luminance at a position 670 mm away from the light source were measured. The luminance measurements were taken with a two-dimensional luminometer (manufactured by TOPCOM; product name: SR-5000HS). Relative to the luminance at the position 30 mm away from the light source (near end) being defined as 100%, a ratio of the luminance at the position 670 mm away from the light source (far end) was measured. The results are shown in Table 1.

**[Table 1]**

| | low-refractive index layer | visible light transmittance (%) | haze value(%) | soil resistance | scratch resistance | light leak after soil resistance test | light leak after scratch resistance test | rate of luminance at far end |
|---|---|---|---|---|---|---|---|---|
| Ex.1 | YES | 88 | <2 | ○ | ○ | ○ | ○ | 70% |
| Ex. 2 | YES | 88 | <2 | ○ | ○ | ○ | ○ | >90% |
| Comp. Ex. 1 | NO | 88 | <2 | × | × | × | × | 52% |
| Comp. Ex. 2 | NO | 88 | <2 | ○ | ○ | × | × | 53% |
| Comp. Ex. 3 | YES | 46 | 81 | ○ | ○ | ○ | ○ | <10% |

In Example 1, it can be seen that light is being guided losslessly, without the influences of dirt, because low-refractive index layers exist on both sides of the lightguide layer. It can also be seen that, even if a light-absorbing medium exists in the middle of the guiding path, light is losslessly propagated between the inlet and the outlet.

It can also be seen that, in Example 2, light is more uniformly extracted at the inlet and the outlet because of the patterned low-refractive index layer.

### [construction component]

The aforementioned transparent illumination devices of a sheet shape (or film shape) are used for construction components. The illumination device itself may be used as a construction component, or as a part of a construction component. Construction components include those for exterior applications and those for interior applications. For example, they can be used as window components, wall components, partitions, ceiling (skylight) components, staircase components, handrail components, or floor components. Otherwise, they can be used as illumination devices for streets, crime prevention purposes, emergency uses, gardens, swimming pools/ponds (underwater), within warehouses, within factories, and under eaves (outdoors). All of them are utilized as transparent plates when not in use.

It is also possible to add a function of changing the illumination color and/or a function of changing the lighting regions. The color or lighting regions may be changed with time. The type(s) (color(s)), number, and positioning of LED(s) to be used as the light source may be various. The shape, size, and thickness of the lightguide layer may also be various.

Moreover, a plurality of sheet-shaped illumination devices may be used in a manner of tiling up to obtain a larger illumination device or a larger construction component. A plurality of sheet-shaped illumination devices may be used in layered form.

By using an illumination device according to an embodiment of the present invention, a construction component with good design or fun can be provided.

### INDUSTRIAL APPLICABILITY

According to embodiments of the present invention, an illumination device and a lightguide component for illumination devices having a higher transmittance than conventional and having a small haze value are provided, and lighting with good design or fun is provided. According to an embodiment of the present invention, a construction component which enables lighting with good design or fun is provided.

### REFERENCE SIGNS LIST

**10**, **10A**, **10B**: lightguide layer
**14**, **14A**, **14B**, **64A**, **64B**: internal space
**20A**, **20B**: low-refractive index layer
**30A**, **30B**, **30C**: base layer
**40A**, **40B**: hard coat layer
**52**, **54**, **56**, **58** adhesive layer
**100A**, **100B**, **200A**, **200B**: lightguide component
**100A_L**, **200A_L**: illumination device

## Claims

1. A lightguide component for illumination devices comprising:
a lightguide layer having a first principal face, a second principal face at an opposite side from the first principal face, and a light-receiving side face to receive light emitted from a light source;
a first low-refractive index layer that is disposed at the first principal face side of the lightguide layer, the first low-refractive index layer having a refractive index n_{L1} which is smaller than a refractive index n_{GP} of the lightguide layer; and
a light distribution controlling structure capable of at least directing a portion of light propagating in the lightguide layer toward the first low-refractive index layer or in an opposite direction from the first low-refractive index layer, wherein
the lightguide component has a visible light transmittance of 60% or more and a haze value of less than 10%.

2. The lightguide component for illumination devices of claim 1, wherein the light distribution controlling structure at least directs a portion of light propagating in the lightguide layer toward the first low-refractive index layer.

3. The lightguide component for illumination devices of claim 1, wherein the light distribution controlling structure at least directs a portion of light propagating in the lightguide layer in an opposite direction from the first low-refractive index layer.

4. The lightguide component for illumination devices of any one of claims 1 to 3, further comprising a first hard coat layer that is disposed at an opposite side of the first low-refractive index layer from the lightguide layer, the first hard coat layer having a hardness which is pencil hardness H or higher.

5. The lightguide component for illumination devices of any one of claims 1 to 4, comprising a first base layer at an opposite side of the first low-refractive index layer from the lightguide layer, wherein the first hard coat layer is formed at an opposite side of the first base layer from the first low-refractive index layer.

6. The lightguide component for illumination devices of any one of claims 1 to 5, wherein the light distribution controlling structure includes a plurality of internal spaces creating an interface that directs light via total internal reflection toward the first low-refractive index layer or in an opposite direction from the first low-refractive index layer.

7. The lightguide component for illumination devices of claim 6, wherein the light distribution controlling structure comprises a first light distribution controlling structure in which the plurality of internal spaces are formed in the lightguide layer.

8. The lightguide component for illumination devices of claim 6, wherein the light distribution controlling structure comprises a second light distribution controlling structure in which the plurality of internal spaces are formed in a first redirection layer that is provided between the lightguide layer and the first low-refractive index layer.

9. The lightguide component for illumination devices of claim 8, further comprising a first light coupling layer that is provided between the lightguide layer and the first redirection layer; and
the first light coupling layer includes a plurality of first low-refractive index regions having a refractive index n_{C1} which is smaller than the refractive index n_{GP} of the lightguide layer.

10. The lightguide component for illumination devices of claim 6, wherein the light distribution controlling structure comprises a third light distribution controlling structure in which the plurality of internal spaces are formed in a second redirection layer that is provided on the second principal face of the lightguide layer.

11. The lightguide component for illumination devices of any one of claims 6 to 10, wherein, in a plan view of the lightguide layer from a normal direction of the first principal face, a ratio of an area of the plurality of internal spaces to an area of the lightguide layer is 30% or less.

12. The lightguide component for illumination devices of any one of claims 1 to 11, further comprising a second low-refractive index layer that is disposed at the second principal face side of the lightguide layer, the second low-refractive index layer having a refractive index n_{L2} which is smaller than the refractive index n_{GP} of the lightguide layer.

13. The lightguide component for illumination devices of claim 12, further comprising a second hard coat layer that is disposed at an opposite side of the second low-refractive index layer from the lightguide layer, the second hard coat layer having a hardness H_{H2} which is higher than a hardness H_{GP} of the lightguide layer.

14. The lightguide component for illumination devices of claim 13, comprising a second base layer at an opposite side of the second low-refractive index layer from the lightguide layer, wherein the second hard coat layer is formed at an opposite side of the second base layer from the second low-refractive index layer.

15. The lightguide component for illumination devices of claim 10, further comprising a second light coupling layer that is provided between the lightguide layer and the second redirection layer, wherein
the second light coupling layer includes a plurality of second low-refractive index regions having a refractive index n_{C2} which is smaller than the refractive index n_{GP} of the lightguide layer.

16. The lightguide component for illumination devices of claim 13 or 14 indirectly depending from claim 4, wherein the first hard coat layer has a haze value which is greater than a haze value of the second hard coat layer.

17. The lightguide component for illumination devices of any one of claims 1 to 16, further comprising an anti-soiling layer which is water repellent and/or oil repellent as an outermost layer at the first principal face side or the second principal face side.

18. The lightguide component for illumination devices of claim 17, further comprising an anti-reflection layer provided at the lightguide layer side of the anti-soiling layer.

19. An illumination device comprising:
the lightguide component for illumination devices of any one of claims 1 to 18; and
a light source to emit light toward the light-receiving side face.

20. A construction component comprising the lightguide component for illumination devices of any one of claims 1 to 18.
